(19) Europäisches Patentamt
European Patent Office
Office européen des brevets

(11) EP 4 184 637 A1

(12) **EUROPEAN PATENT APPLICATION**
published in accordance with Art. 153(4) EPC

(43) Date of publication:
**24.05.2023 Bulletin 2023/21**

(21) Application number: **21842371.3**

(22) Date of filing: **16.07.2021**

(51) International Patent Classification (IPC):
***H01M 10/052*** (2010.01) ***H01M 10/0562*** (2010.01)
***H01M 10/058*** (2010.01) ***H01M 50/105*** (2021.01)
***H01M 50/121*** (2021.01) ***H01M 50/131*** (2021.01)
***H01M 50/184*** (2021.01) ***H01M 50/193*** (2021.01)
***H01M 50/198*** (2021.01)

(52) Cooperative Patent Classification (CPC):
**H01M 10/052; H01M 10/0562; H01M 10/058; H01M 50/105; H01M 50/121; H01M 50/131; H01M 50/184; H01M 50/193; H01M 50/198**

(86) International application number:
**PCT/JP2021/026897**

(87) International publication number:
**WO 2022/014718 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2020 JP 2020122462**

(71) Applicant: **DAI NIPPON PRINTING CO., LTD.**
**Tokyo 162-8001 (JP)**

(72) Inventors:
- **SASAKI, Miho**
  **Tokyo 162-8001 (JP)**
- **MOCHIZUKI, Youichi**
  **Tokyo 162-8001 (JP)**
- **KAGATA, Tsubasa**
  **Tokyo 162-8001 (JP)**

(74) Representative: **Müller-Boré & Partner Patentanwälte PartG mbB**
**Friedenheimer Brücke 21**
**80639 München (DE)**

(54) **ADHESIVE FILM FOR METAL TERMINALS OF ALL-SOLID-STATE BATTERIES, METAL TERMINAL WITH ADHESIVE FILM FOR METAL TERMINALS, ALL-SOLID-STATE BATTERY USING SAID ADHESIVE FILM FOR METAL TERMINALS, AND METHOD FOR PRODUCING ALL-SOLID-STATE BATTERY**

(57) Provided is an adhesive film for a metal terminal of an all-solid-state battery that effectively inhibits hydrogen sulfide generated inside an all-solid-state battery containing a sulfide solid electrolyte material from leaking outside. An adhesive film for a metal terminal of an all-solid-state battery, which is to be interposed between a metal terminal electrically connected to an electrode of a battery element and an all-solid-state battery packaging material for sealing the battery element, wherein the all-solid-state battery comprises a sulfide solid electrolyte material, the adhesive film for a metal terminal comprises at least one resin layer, and the resin constituting the resin layer has a hydrogen sulfide transmission amount of $1.0 \times 10^{-9}$ cc·mm/cm$^2$·sec·cmHg or less.

EP 4 184 637 A1

## Description

### Technical Field

The present disclosure relates to an adhesive film for a metal terminal of an all-solid-state battery, a metal terminal with the adhesive film for a metal terminal attached thereto, an all-solid-state battery comprising the adhesive film for a metal terminal, and a method for producing the all-solid-state battery.

### Background Art

All-solid-state batteries containing a solid electrolyte as an electrolyte are known. Such all-solid-state batteries, which do not contain an organic solvent in the batteries, have advantages such as high safety and a wide range of operating temperatures.

Among inorganic solid electrolytes, sulfide-based inorganic solid electrolytes are known to have high ion conductivity. However, as described in Patent Literature 1, for example, such sulfide-based inorganic solid electrolytes contain sulfur compounds that can generate hazardous hydrogen sulfide when reacted with water. Therefore, if an all-solid-state battery is damaged, there is a possibility that hydrogen sulfide gas may be generated due to the reaction with moisture in the air.

In recent years, along with improvements in the performance of electric cars, hybrid electric cars, personal computers, cameras, mobile phones, and the like, batteries have been required to have various shapes and simultaneously, to be thinner and lighter weight. However, metallic packaging materials that have heretofore been widely used for batteries are disadvantageous in that they have difficulty in keeping up with the diversification of shapes, and are limited in weight reduction. Thus, a film-shaped packaging material in which a base material/a barrier layer/a heat-sealable resin layer are sequentially laminated has been proposed as a packaging material that can be readily processed into various shapes, and can achieve a thickness reduction and a weight reduction.

Such a film-shaped packaging material is typically molded into a bag shape or molded with a mold to have a space for housing a battery element. A battery element including electrodes, a solid electrolyte, and the like is disposed in the space, and then the heat-sealable resin layers are heat-sealed to each other. As a result, a battery in which the battery element is housed inside the packaging material is obtained.

Use of this film-shaped packaging material as a packaging material for an all-solid-state battery is expected to reduce the weight of an electric car, a hybrid electric car, or the like.

In an all-solid-state battery obtained using the film-shaped packaging material, metal terminals protrude from the heat-sealed regions of the all-solid-state battery packaging material. The battery element sealed with the all-solid-state battery packaging material is electrically connected to an external apparatus via the metal terminals electrically connected to the electrodes of the battery element. That is, in the regions where the all-solid-state battery packaging materials are heat-sealed, the regions where the metal terminals are present are heat-sealed with the heat-sealable resin layers sandwiching each metal terminal. The metal terminals and the heat-sealable resin layers are formed of different types of materials, and therefore, the adhesion at the interface between the metal terminals and the heat-sealable resin layers tends to decrease.

Thus, an adhesive film may be disposed between each metal terminal and the heat-sealable resin layer, for the purpose of improving the adhesion therebetween, for example. An example of such an adhesive film is, for example, the one disclosed in Patent Literature 2, although this adhesive film is not intended for an all-solid-state battery.

### Citation List

#### Patent Literature

Patent Literature 1: JP-A-2008-103288
Patent Literature 2: JP-A-2015-79638

### Summary of Invention

#### Technical Problem

In an all-solid-state battery containing a sulfide solid electrolyte material, hydrogen sulfide may be generated inside the all-solid-state battery, because of moisture in the all-solid-state battery. Moisture may also enter into the all-solid-state battery during the production of the all-solid-state battery.

Patent Literature 1 proposes a technology for dealing with the generation of hydrogen sulfide gas in the event of damage to an all-solid-state battery obtained using a sulfide-based inorganic solid electrolyte. In this technology, a packaging material for the all-solid-state battery is further coated with an adsorbent material and/or an alkaline substance-containing material.

However, when using the film-shaped packaging material in which a base material/a barrier layer/a heat-sealable resin layer are sequentially laminated, the generation of hydrogen sulfide inside an all-solid-state battery may occur not only because of damage to the all-solid-state battery, but also because of the ingress of a small amount of water vapor into the all-solid-state battery from the heat-sealed regions of the heat-sealable resin layers. As a result of research by the inventors of the present disclosure, they have found that the hydrogen sulfide generated inside the all-solid-state battery may permeate through the adhesive film disposed between each metal terminal and the heat-sealable resin layer, and leak outside.

Under such circumstances, it is a main object of the present disclosure to provide an adhesive film for a metal terminal of an all-solid-state battery that effectively inhibits hydrogen sulfide generated inside an all-solid-state battery containing a sulfide solid electrolyte material from leaking outside. It is also an object of the present disclosure to provide a metal terminal with an adhesive film for a metal terminal attached thereto obtained using the adhesive film for a metal terminal, an all-solid-state battery comprising the adhesive film for a metal terminal, and a method for producing the all-solid-state battery.

Solution to Problem

The inventors of the present disclosure have conducted extensive research to solve the aforementioned problem. As a result, they have found that when an adhesive film for a metal terminal comprises at least one resin layer, and the resin constituting the resin layer has a hydrogen sulfide transmission amount of $1.0 \times 10^{-9}$ cc·mm/cm$^2$·sec·cmHg or less, hydrogen sulfide generated inside an all-solid-state battery containing a sulfide solid electrolyte material is effectively inhibited from leaking outside. The present disclosure has been completed as a result of further research based on this finding.

In summary, the present disclosure provides an embodiment of the invention as set forth below:

An adhesive film for a metal terminal of an all-solid-state battery, which is to be interposed between a metal terminal electrically connected to an electrode of a battery element and an all-solid-state battery packaging material for sealing the battery element,
wherein the all-solid-state battery comprises a sulfide solid electrolyte material,
the adhesive film for a metal terminal comprises at least one resin layer, and
the resin constituting the resin layer has a hydrogen sulfide transmission amount of $1.0 \times 10^{-9}$ cc·mm/cm$^2$·sec·cmHg or less.

Advantageous Effects of Invention

The present disclosure can provide an adhesive film for a metal terminal of an all-solid-state battery that effectively inhibits hydrogen sulfide generated inside an all-solid-state battery containing a sulfide solid electrolyte material from leaking outside. It is also an object of the present disclosure to provide a metal terminal with an adhesive film for a metal terminal attached thereto obtained using the adhesive film for a metal terminal, an all-solid-state battery comprising the adhesive film for a metal terminal, and a method for producing the all-solid-state battery.

Brief Description of Drawings

Fig. 1 is a schematic diagram showing one exemplary cross-sectional structure of an all-solid-state battery to which an all-solid-state battery packaging material of the present disclosure is applied.
Fig. 2 is a schematic diagram showing one exemplary cross-sectional structure of an all-solid-state battery to which an all-solid-state battery packaging material of the present disclosure is applied.
Fig. 3 is a schematic plan view of one exemplary all-solid-state battery to which an all-solid-state battery packaging material of the present disclosure is applied.
Fig. 4 is a schematic cross-sectional view of an adhesive film for a metal terminal of the present disclosure.
Fig. 5 is a schematic cross-sectional view of an adhesive film for a metal terminal of the present disclosure.
Fig. 6 is a schematic cross-sectional view of an adhesive film for a metal terminal of the present disclosure.

Fig. 7 is a schematic cross-sectional view of an adhesive film for a metal terminal of the present disclosure.
Fig. 8 is a schematic cross-sectional view of an all-solid-state battery packaging material of the present disclosure.
Fig. 9 is a schematic cross-sectional view of an all-solid-state battery packaging material of the present disclosure.
Fig. 10 is a schematic cross-sectional view of an all-solid-state battery packaging material of the present disclosure.
Fig. 11 is a schematic cross-sectional view of an all-solid-state battery packaging material of the present disclosure.
Fig. 12 is a schematic cross-sectional view of an all-solid-state battery packaging material of the present disclosure.
Fig. 13 is a schematic diagram for explaining a method of measuring the hydrogen sulfide transmission amount of a resin.

Description of Embodiments

An adhesive film for a metal terminal of the present disclosure is an adhesive film for a metal terminal of an all-solid-state battery, which is to be interposed between a metal terminal electrically connected to an electrode of a battery element and an all-solid-state battery packaging material for sealing the battery element, wherein the all-solid-state battery comprises a sulfide solid electrolyte material, the adhesive film for a metal terminal comprises at least one resin layer, and the resin constituting the resin layer has a hydrogen sulfide transmission amount of $1.0 \times 10^{-9}$ cc·mm/cm$^2$·sec·cmHg or less. Because of these features, the adhesive film for a metal terminal of the present disclosure is capable of effectively inhibiting hydrogen sulfide generated inside an all-solid-state battery containing a sulfide solid electrolyte material from leaking outside.

An all-solid-state battery of the present disclosure is an all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material, wherein the solid electrolyte layer comprises a sulfide solid electrolyte material, the all-solid-state battery comprises a metal terminal electrically connected to each of the positive electrode active material layer and the negative electrode active material layer and protruding outside the all-solid-state battery packaging material, and the adhesive film for a metal terminal of the present disclosure is interposed between the metal terminal and the all-solid-state battery packaging material. The following describes in detail the adhesive film for a metal terminal of the present disclosure, a metal terminal with the adhesive film for a metal terminal attached thereto, the all-solid-state battery comprising the adhesive film for a metal terminal, and a method for producing the all-solid-state battery.

In the present specification, any numerical range indicated by "... to ... " is intended to mean "... or more" and "... or less". For example, the recitation "2 to 15 mm" is intended to mean 2 mm or more and 15 mm or less.

## 1. Adhesive Film for Metal Terminal

The adhesive film for a metal terminal of the present disclosure is to be interposed between a metal terminal electrically connected to an electrode of a battery element and an all-solid-state battery packaging material for sealing the battery element. Specifically, as shown in Figs. 1 to 3, for example, an adhesive film 1 for a metal terminal of the present disclosure is interposed between a metal terminal 60 electrically connected to an electrode (a negative electrode current collector 22 or a positive electrode current collector 32) of a battery element (comprising at least a single cell 50 including a positive electrode active material layer 31, a negative electrode active material layer 21, and a solid electrolyte layer 40 laminated between the positive electrode active material layer 31 and the negative electrode active material layer 21) and an all-solid-state battery packaging material 10 for sealing the battery element. The metal terminal 60 protrudes outside the all-solid-state battery packaging material 10, and is sandwiched between the all-solid-state battery packaging materials 10 with the adhesive film 1 for a metal terminal interposed therebetween, in peripheral regions of the all-solid-state battery packaging materials 10 that have been heat-sealed.

As described above, for example, during rapid charging or a hot press step in the production process of an all-solid-state battery, the temperature is expected to reach as high as about 150°C, and therefore, a useful temperature of about 150°C is required. Thus, the all-solid-state battery packaging material 10 needs to employ a heat-sealable resin layer with a melting point of 150°C or more. When heat-sealing the sides of the all-solid-state battery packaging materials to each other, the heating temperature is usually in the range of about 160 to 250°C, and the pressure is usually in the range of about 0.5 to 2.0 MPa. The sealing is performed using flat metal seal bars. The sides where the metal terminal and the all-solid-state battery packaging materials are to be heat-sealed with the adhesive film for a metal terminal interposed therebetween are also sealed at a heating temperature usually in the range of about 160 to 250°C and a pressure usually in the range of about 0.5 to 2.0 MPa, using a stepped metal seal head optionally provided in an appropriate region thereof with a step for adjusting the difference due to the thickness of the metal terminal and the adhesive film for a metal terminal. The adhesive film is preferably previously bonded to a predetermined position of the metal terminal. For example, when the adhesive film for a metal terminal is bonded by thermal welding, heating and

pressing is typically performed a plurality of times, such as through a temporary bonding step and a permanent bonding step to the metal terminal. The temporary bonding step is to temporarily fix the adhesive film for a metal terminal to the metal terminal, and remove air bubbles. The permanent bonding step is to bond the adhesive film for a metal terminal to the metal terminal by performing heating and pressing one or a plurality of times under temperature conditions higher than in the temporary bonding step. The temporary bonding step for bonding the adhesive film for a metal terminal to the metal terminal is performed, for example, about once or twice at a temperature of about 160 to 230°C and a pressure of about 0.1 to 0.5 MPa for a time of about 10 to 20 seconds, using a metal seal head coated with heat-resistant rubber with a hardness of about 20 to 50 and a thickness of about 2 to 5 mm. The permanent bonding step is intended to achieve a heat seal between the adhesive film for a metal terminal and the metal terminal, and is performed, for example, about once or twice at a temperature of about 180 to 250°C and a pressure of about 0.2 to 1.0 MPa for a time of about 10 to 20 seconds, using a metal seal head coated with heat-resistant rubber with a hardness of about 20 to 50 and a thickness of about 2 to 5 mm. Optionally, the seal head may be provided in an appropriate region thereof with a step for adjusting the difference due to the thickness of the metal terminal and the adhesive film for a metal terminal, which allows efficient welding to be performed. An adhesive layer may also be provided on the metal terminal-side surface of the adhesive film for a metal terminal, which allows the metal terminal and the adhesive film for a metal terminal to be bonded at a relatively low temperature. For example, heat resistance can be imparted by laminating, as the adhesive layer, a thermosetting resin that is bondable to a metal in an incompletely cured state, followed by heat-sealing the metal terminal and the adhesive film for a metal terminal, followed by curing by aging. In this case, the sealing conditions for the metal terminal and the adhesive film for a metal terminal are, for example, about 100 to 200°C and a pressure of about 0.2 to 3.0 MPa; and the aging conditions are about 40 to 150°C for about several minutes to 5 days. When the power storage device to which the adhesive film for a metal terminal of the present disclosure is applied is an all-solid-state battery, a particularly high temperature and a particularly high pressure are applied to the adhesive film for a metal terminal. The method of attaching the adhesive film for a metal terminal described herein is merely illustrative, and the attachment method is not specifically limited; for example, the pressing time may be adjusted appropriately according to the thickness or the like of the adhesive film for a metal terminal.

The adhesive film 1 for a metal terminal of the present disclosure is provided to improve the adhesion between the metal terminal 60 and the all-solid-state battery packaging material 10. The hermeticity of the battery element is improved by increasing the adhesion between the metal terminal 60 and the all-solid-state battery packaging material 10. As described above, when heat-sealing the battery element, the battery element is sealed such that the metal terminal 60 electrically connected to an electrode of the battery element protrudes outside the all-solid-state battery packaging material 10. At this time, because the metal terminal 60 formed of metal and a heat-sealable resin layer 4 positioned as the innermost layer of the all-solid-state battery packaging material 10 are formed of different types of materials, the hermeticity of the battery element tends to decrease at the interface between the metal terminal 60 and the heat-sealable resin layer 4, if the adhesive film is not used.

The adhesive film 1 for a metal terminal of the present disclosure comprises at least one resin layer (hereinafter sometimes referred to as "resin layer A"), which contains a resin with a hydrogen sulfide transmission amount of $1.0 \times 10^{-9}$ cc·mm/cm$^2$·sec·cmHg or less. The adhesive film 1 for a metal terminal of the present disclosure may be composed of a single layer, as shown in Fig. 4, or may be composed of a plurality of layers, as shown in Figs. 5 to 7.

When the adhesive film 1 for a metal terminal of the present disclosure is composed of a single layer, it is composed of the resin layer A containing a resin with a hydrogen sulfide transmission amount of $1.0 \times 10^{-9}$ cc·mm/cm$^2$·sec·cmHg or less, and the resin layer A forms the metal terminal-side surface and the surface of the all-solid-state battery packaging material. In the adhesive film 1 for a metal terminal of the present disclosure, the resin forming the all-solid-state battery packaging material-side surface and the resin forming the metal terminal-side surface are preferably the same resin or different resins.

When the adhesive film 1 for a metal terminal of the present disclosure is composed of a plurality of layers, at least one layer may be composed of the resin layer A. For example, as shown in Fig. 5, when the adhesive film 1 for a metal terminal of the present disclosure has a two-layer structure, it is a laminate of a first resin layer 12a and a second resin layer 12b, with at least one of these layers being composed of the resin layer A.

For example, as shown in Fig. 6, when the adhesive film 1 for a metal terminal of the present disclosure has a three-layer structure, it is a laminate in which the first resin layer 12a, an intermediate layer 11, and the second resin layer 12b are laminated in this order, with at least one of these layers being composed of the resin layer A. The intermediate layer 11, in particular, preferably has high heat resistance, and preferably has a melting point of 200°C or more, more preferably 200 to 300°C. The melting point of the intermediate layer 11 is the endothermic peak as measured with a differential scanning calorimeter (DSC).

The adhesive film 1 for a metal terminal of the present disclosure may be composed of four or more layers. For example, as shown in Fig. 7, an adhesion-enhancing agent layer 13 may be laminated both between the first resin layer 12a and the intermediate layer 11 and between the second resin layer 12b and the intermediate layer 11.

In the present disclosure, the first resin layer 12a is disposed on the metal terminal side, while the second resin

layer 12b is disposed on the all-solid-state battery packaging material 10 side. The metal terminal-side surface of the adhesive film 1 for a metal terminal of the present disclosure is heat sealable to the metal (metal constituting the metal terminal), while the all-solid-state battery packaging material-side surface is heat sealable to the below-described heat-sealable resin layer. The all-solid-state battery packaging material-side surface is preferably composed of the resin layer A. The metal terminal-side surface is also preferably composed of the resin layer A.

In the adhesive film 1 for a metal terminal of the present disclosure, the resin constituting the resin layer A has a hydrogen sulfide transmission amount of $1.0 \times 10^{-9}$ cc·mm/cm$^2$·sec·cmHg or less. The hydrogen sulfide transmission amount of the resin constituting the resin layer A can be measured using the method specifically described in the Examples. The adhesive film 1 for a metal terminal of the present disclosure as a whole preferably has a hydrogen sulfide transmission amount of $1.0 \times 10^{-9}$ cc·mm/cm$^2$·sec·cmHg or less.

The hydrogen sulfide transmission amount of the resin constituting the resin layer A is preferably about $8.0 \times 10^{-10}$ cc·mm/cm$^2$·sec·cmHg or less, and more preferably about $5.0 \times 10^{-10}$ cc·mm/cm$^2$·sec·cmHg or less. The lower limit of the hydrogen sulfide transmission amount is, for example, about $1.0 \times 10^{-10}$ cc·mm/cm$^2$·sec·cmHg. The hydrogen sulfide transmission amount of the adhesive film 1 for a metal terminal of the present disclosure as a whole is preferably about $8.0 \times 10^{-10}$ cc·mm/cm$^2$·sec·cmHg or less, and more preferably about $5.0 \times 10^{-10}$ cc·mm/cm$^2$·sec·cmHg or less. The lower limit of the hydrogen sulfide transmission amount is, for example, about $1.0 \times 10^{-10}$ cc·mm/cm$^2$·sec·cmHg.

Examples of resins with a hydrogen sulfide transmission amount of $1.0 \times 10^{-9}$ cc·mm/cm$^2$·sec·cmHg or less include polyesters, fluororesins, and cellophane, with polyesters and fluororesins being preferred. Specific examples of polyesters include polyethylene terephthalate, polybutylene terephthalate, polyethylene naphthalate, polybutylene naphthalate, polyethylene isophthalate, and copolyesters, with polyethylene terephthalate being preferred. Preferred examples of fluororesins include polytetrafluoroethylene (PTFE), tetrafluoroethylene-ethylene copolymer (ETFE), and polychlorotrifluoroethylene (PCTFE). Particularly preferred as the resin constituting the resin layer A is polytetrafluoroethylene, which has a very low hydrogen sulfide transmission amount and a very low water vapor transmission rate.

When the resin with a hydrogen sulfide transmission amount of $1.0 \times 10^{-9}$ cc·mm/cm$^2$·sec·cmHg or less contains polybutylene terephthalate, the resin preferably further contains an elastomer in addition to polybutylene terephthalate. The elastomer plays the role of increasing the flexibility of the polybutylene terephthalate film while ensuring durability in a high-temperature environment. Preferably, the elastomer is, for example, at least one thermoplastic elastomer selected from polyesters, polyamides, polyurethanes, polyolefins, polystyrenes, and polyethers, or a thermoplastic elastomer that is a copolymer thereof. The elastomer content in the polybutylene terephthalate film is not limited as long as the flexibility of the polybutylene terephthalate can be increased while ensuring durability in a high-temperature environment; for example, it is about 0.1% by mass or more, preferably about 0.5% by mass or more, more preferably about 1.0% by mass or more, and still more preferably about 3.0% by mass or more. On the other hand, the content is, for example, about 10.0% by mass or less, about 8.0% by mass or less, or about 5.0% by mass or less. Preferred ranges of the content include from about 0.1 to 10.0% by mass, from about 0.1 to 8.0% by mass, from about 0.1 to 5.0% by mass, from about 0.5 to 10.0% by mass, from about 0.5 to 8.0% by mass, from about 0.5 to 5.0% by mass, from about 1.0 to 10.0% by mass, from about 1.0 to 8.0% by mass, from about 1.0 to 5.0% by mass, from about 3.0 to 10.0% by mass, from about 3.0 to 8.0% by mass, and from about 3.0 to 5.0% by mass.

Moreover, when the resin with a hydrogen sulfide transmission amount of $1.0 \times 10^{-9}$ cc·mm/cm$^2$·sec·cmHg or less contains polybutylene terephthalate, the polybutylene terephthalate may contain copolymerized polybutylene terephthalate, or the polybutylene terephthalate may be copolymerized polybutylene terephthalate. While polybutylene terephthalate is generally a resin obtained by polycondensation of terephthalic acid and 1,4-butanediol, copolymerized polybutylene terephthalate is a resin that has incorporated a soft segment by further introducing a dicarboxylic acid such as isophthalic acid, dodecanedioic acid, or sebacic acid, a diol such as neopentyl glycol or polytetramethylene glycol, and the like, and performing the copolymerization.

The resin layer A may be formed of one resin alone, or may be formed of a blend polymer obtained by combining two or more resins. Furthermore, the resin layer A may be formed of only one layer, or may be formed of two or more layers composed of an identical or different resins.

The melting point of the resin layer A at least one layer of which is included in the adhesive film 1 for a metal terminal of the present disclosure is preferably about 150°C or more, more preferably about 180°C or more, still more preferably about 200°C or more, and even more preferably about 210°C or more, while it is preferably about 350°C or less, more preferably about 300°C or less, still more preferably about 270°C or less, and even more preferably about 250°C or less. Preferred ranges include from about 150 to 350°C, from about 150 to 300°C, from about 150 to 270°C, from about 150 to 250°C, from about 180 to 350°C, from about 180 to 300°C, from about 180 to 270°C, from about 180 to 250°C, from about 200 to 350°C, from about 200 to 300°C, from about 200 to 270°C, from about 200 to 250°C, from about 210 to 350°C, from about 210 to 300°C, from about 210 to 270°C, and from about 210 to 250°C. The melting point of the resin layer A is the endothermic peak as measured with a differential scanning calorimeter (DSC).

From the viewpoint of satisfactorily achieving the effect of the present disclosure, the rein layer A preferably has a thickness of about 20 μm or more, more preferably about 30 μm or more, preferably about 40 μm or more. From

the same viewpoint, the thickness is preferably about 500 μm or less, more preferably about 300 μm or less, and preferably about 200 μm or less. Preferred ranges of the thickness include from about 20 to 500 μm, from about 20 to 300 μm, from about 20 to 200 μm, from about 30 to 500 μm, from about 30 to 300 μm, from about 30 to 200 μm, from about 40 to 500 μm, from about 40 to 300 μm, and from about 40 to 200 μm.

The adhesive film 1 for a metal terminal of the present disclosure can include at least another resin layer different from the resin layer A. However, from the viewpoint of ensuring excellent heat resistance of the adhesive film 1 for a metal terminal of the present disclosure, the other resin layer preferably has a melting point of 150°C or more. The melting point of the other resin layer is preferably about 150 to 300°C, and more preferably about 180 to 280°C. The melting point of the other resin layer is the endothermic peak as measured with a differential scanning calorimeter (DSC).

When the adhesive film 1 for a metal terminal of the present disclosure includes two or more other resin layers, the composition of each of the other resin layers may be identical or different. Likewise, when the adhesive film 1 for a metal terminal of the present disclosure includes two or more resin layers A, the composition of each of the resin layers A may be identical or different.

From the viewpoint of satisfactorily achieving the effect of the present disclosure, the other resin layer preferably has a thickness of about 20 μm or more, more preferably about 30 μm or more, preferably about 40 μm or more. From the same viewpoint, the thickness is preferably about 500 μm or less, more preferably about 300 μm or less, and preferably about 200 μm or less. Preferred ranges of the thickness include from about 20 to 500 μm, from about 20 to 300 μm, from about 20 to 200 μm, from about 30 to 500 μm, from about 30 to 300 μm, from about 30 to 200 μm, from about 40 to 500 μm, from about 40 to 300 μm, and from about 40 to 200 μm.

When the adhesive film 1 for a metal terminal of the present disclosure includes other resin layer(s), examples of laminated structures of the adhesive film 1 for a metal terminal include a laminate as shown in Fig. 5 in which the first resin layer 12a is the resin layer A, and the second resin layer 12b is the other resin layer; a laminate as shown in Fig. 5 in which the second resin layer 12b is the resin layer A, and the first resin layer 12a is the other resin layer; a laminate as shown in Fig. 6 or 7 in which the first resin layer 12a is the resin layer A, and the intermediate layer 11 and the second resin layer 12b are the other resin layers; a laminate as shown in Fig. 6 or 7 in which the second resin layer 12b is the resin layer A, and the intermediate layer 11 and the first resin layer 12a are the other resin layers; a laminate as shown in Fig. 6 or 7 in which the intermediate layer 11 is the resin layer A, and the first resin layer 12a and the second resin layer 12b are the other resin layers; a laminate as shown in Fig. 6 or 7 in which the first resin layer 12a and the second resin layer 12b are the resin layers A, and the intermediate layer 11 is the other resin layer; a laminate as shown in Fig. 6 or 7 in which the first resin layer 12a and the intermediate layer 11 are the resin layers A, and the second resin layer 12b is the other resin layer; and a laminate as shown in Fig. 6 or 7 in which the second resin layer 12b and the intermediate layer 11 are the resin layers A, and the first resin layer 12a is the other resin layer.

Examples of resins constituting the other resin layers include, but are not limited to, polyolefin-based resins, polyamide-based resins, polyester-based resins, epoxy resins, acrylic resins, fluororesins, silicone resins, phenol resins, polyetherimides, polyimides, polycarbonates, and mixtures or copolymers thereof.

The other resin layer may also be an adhesive layer with adhesiveness. The adhesive layer is preferably formed of a resin composition containing at least one of a polyester and a polycarbonate, and at least one of an alicyclic isocyanate compound and an aromatic isocyanate compound. The adhesive layer preferably constitutes the metal terminal-side surface of the adhesive film 1 for a metal terminal, because it has excellent adhesion to the metal constituting the metal terminal.

The polyester is preferably a polyester polyol. The polyester polyol is not limited as long as it has an ester bond in the polymer main chain and has a plurality of hydroxy groups at the ends or a side chain. The polycarbonate is preferably a polycarbonate polyol. The polycarbonate polyol is not limited as long as it has a carbonate bond in the polymer main chain and has a plurality of hydroxy groups at the ends or a side chain. The polyester is also preferably, for example, a polyester obtained by reacting a polyester polyol with a polyisocyanate (such as a diisocyanate) beforehand to achieve urethane chain extension, and the polycarbonate is also preferably, for example, a polycarbonate obtained by reacting a polycarbonate polyol with a polyisocyanate (such as a diisocyanate) beforehand to achieve urethane chain extension. The resin composition forming the adhesive layer may contain a single polyester or two or more polyesters, or may contain a single polycarbonate or two or more polycarbonates.

The alicyclic isocyanate compound is not limited as long as it is a compound having an alicyclic structure and an isocyanate group. The alicyclic isocyanate compound preferably has two or more isocyanate groups. Specific examples of the alicyclic isocyanate compound include isophorone diisocyanate (IPDI), bis(4-isocyanatecyclohexyl)methane, 1,3-bis(isocyanatomethyl)cyclohexane, and methylenebis(4,1-cyclohexylene) diisocyanate, as well as isocyanurate or biuret forms thereof, or adducts (for example, TMP: adducts to trimethylolpropane) thereof, mixtures thereof, or copolymers thereof with other polymers. The alicyclic isocyanate compound is also preferably a polyol-modified polyisocyanate obtained by reacting an alicyclic isocyanate with a polyol (such as a polyester polyol) beforehand. The resin composition forming the adhesive layer may contain a single alicyclic isocyanate compound or two or more alicyclic isocyanate compounds.

The aromatic isocyanate compound is not limited as long as it is a compound having an aromatic ring and an isocyanate group. The aromatic isocyanate compound preferably has two or more isocyanate groups. Specific examples of the aromatic isocyanate compound include tolylene diisocyanate (TDI) and diphenylmethane diisocyanate (MDI), as well as isocyanurate or biuret forms thereof, or adducts (for example, TMP: adducts to trimethylolpropane) thereof, mixtures thereof, or copolymers thereof with other polymers. The aromatic isocyanate compound is also preferably a polyol-modified polyisocyanate obtained by reacting an aromatic isocyanate with a polyol (such as a polyester polyol) beforehand. The resin composition forming the adhesive layer may contain a single aromatic isocyanate compound or two or more aromatic isocyanate compounds.

It is only required that the resin composition forming the adhesive layer contains at least one of an alicyclic isocyanate compound and an aromatic isocyanate compound; for example, the resin composition forming the adhesive layer may contain an alicyclic isocyanate compound, and may not contain an aromatic isocyanate compound; or, for example, may contain an aromatic isocyanate compound, and may not contain an alicyclic isocyanate compound; or, for example, may contain both an alicyclic isocyanate compound and an aromatic isocyanate compound. The resin composition forming the adhesive layer preferably contains an aromatic isocyanate compound.

The content of each of the alicyclic isocyanate compound and the aromatic isocyanate compound in the adhesive layer is preferably in the range of 0.1 to 50% by mass, and more preferably in the range of 0.5 to 40% by mass, in the resin composition forming the adhesive layer. When the adhesive layer contains both an alicyclic isocyanate compound and an aromatic isocyanate compound, the total content of these compounds is preferably in the range of 0.1 to 50% by mass, and more preferably in the range of 0.5 to 40% by mass, in the resin composition forming the adhesive layer.

The resin composition forming the adhesive layer may also contain a component for improving adhesiveness, such as a silane coupling agent.

The silane coupling agent to be added to the resin composition forming the adhesive layer may preferably be 3-glycidoxypropyltrimethoxysilane, 3-glycidoxypropyltriethoxysilane, 3-methacryloxypropyltrimethoxysilane, 3-methacryloxypropyltriethoxysilane, 3-aminopropyltrimethoxysilane, 3-aminopropyltriethoxysilane, 3-isocyanatopropylethoxysilane, tris-(trimethoxysilylpropyl)isocyanurate, or the like, from the viewpoint of their compatibility and reactivity with the adhesive, and adhesion to the metal terminal. To adjust the reactivity, it is also possible to select a silane coupling agent in which the trimethoxysilane or triethoxysilane is replaced with a dimethoxysilane or a diethoxysilane, as appropriate.

From the viewpoint of adhesion to the metal terminal, the amount of the silane coupling agent to be added to the adhesive layer is preferably 0.1% by mass or more, more preferably 0.3% by mass or more, and still more preferably 0.5% by mass or more. On the other hand, from the viewpoint of preventing a decrease in the strength of the adhesive layer and bleeding or the like of the silane coupling agent due to the addition of excess silane coupling agent, the amount of the silane coupling agent to be added is preferably 5% by mass or less, more preferably 3% or less, and still more preferably 2% by mass or less. The amount of the silane coupling agent to be added is preferably in the range of 0.1 to 5% by mass, more preferably in the range of 0.3 to 3% by mass, and in the range of 0.5 to 2% by mass.

The other resin layer preferably has a hydrogen sulfide transmission amount of $1.0 \times 10^{-9}$ cc·mm/cm$^2$·sec·cmHg or less, more preferably about $8.0 \times 10^{-10}$ cc·mm/cm$^2$·sec·cmHg or less, and still more preferably about $5.0 \times 10^{-10}$ cc·mm/cm$^2$·sec·cmHg or less. The lower limit of the hydrogen sulfide transmission amount is, for example, about $1.0 \times 10^{-10}$ cc·mm/cm$^2$·sec·cmHg.

Each of the resin layer A and the other resin layer may optionally further contain additives such as a filler. When these layers contain a filler, the filler functions as a spacer, which can effectively inhibit a short circuit between the metal terminal 60 and a barrier layer 3 of the all-solid-state battery packaging material 10. The filler has a particle diameter in the range of, for example, about 0.1 to 35 μm, preferably about 5.0 to 30 μm, or more preferably about 10 to 25 μm. The filler content is preferably about 5 to 30 parts by mass, and more preferably about 10 to 20 parts by mass, per 100 parts by mass of the resin component forming each of the resin layer A and the other resin layer.

The filler may be either inorganic or organic. Examples of inorganic fillers include carbon (carbon and graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide, and calcium carbonate. Examples of organic fillers include fluororesins, phenol resins, urea resins, epoxy resins, acrylic resins, benzoguanamine-formaldehyde condensate, melamine-formaldehyde condensate, crosslinked polymethyl methacrylate, and crosslinked polyethylene. From the viewpoint of shape stability, rigidity, and contents resistance, aluminum oxide, silica, fluororesins, acrylic resins, and benzoguanamine-formaldehyde condensate are preferred; in particular, spherical aluminum oxide and silica are more preferred among the above. As a method of mixing the filler into the resin component forming each of the resin layer A and the other resin layer, the following methods may be adopted, for example: a method in which both components are melt-blended beforehand in a Banbury mixer or the like to form a masterbatch, which is then adjusted to a predetermined mixture ratio; and a method in which the filler is directly mixed into the resin component.

Each of the resin layer A and the other resin layer may also optionally contain a pigment. The pigment may be any of various inorganic pigments. Specific preferred examples of the pigment include carbon (carbon and graphite)

mentioned above as the filler. Carbon (carbon and graphite) is a material generally used inside an all-solid-state battery, and has no effect on the electrolyte. Moreover, carbon (carbon and graphite) has a high coloring effect and thus can achieve a sufficient coloring effect when added only in an amount that does not impair adhesiveness, and also does not melt by heat and thus can increase the apparent melt viscosity of the added resin. Furthermore, carbon (carbon and graphite) can prevent, during thermal bonding (heat sealing), thinning of the region to which pressure is applied, thereby imparting high hermeticity between the all-solid-state battery packaging material and the metal terminal.

When a pigment is to be added to each of the resin layer A and the other resin layer, in the case of using, for example, carbon black having a particle diameter of about 0.03 μm, the amount of the pigment to be added is about 0.05 to 0.3 part by mass, and preferably about 0.1 to 0.2 part by mass, per 100 parts by mass of the resin component forming each of the resin layer A and the other resin layer. By adding a pigment to the resin layer A or the other resin layer, the presence or absence of the adhesive film 1 for a metal terminal can be detected with a sensor or can be visually inspected.

The adhesion-enhancing agent layer 13 is a layer that is optionally provided for the purpose of strongly bonding the intermediate layer 11 and the first resin layer 12a or the intermediate layer 11 and the second resin layer 12b (see Fig. 7). The adhesion-enhancing agent layer 13 may be provided between the intermediate layer 11 and only one of or both the first resin layer 12a and the second resin layer 12b.

The adhesion-enhancing agent layer 13 may be formed using a known adhesion-enhancing agent, such as an isocyanate-, polyethyleneimine-, polyester-, polyurethane-, or polybutadiene-based adhesion-enhancing agent. From the viewpoint of obtaining a high adhesion strength, the adhesion-enhancing agent layer 13 is preferably formed of an isocyanate-based adhesion-enhancing agent among the above. An isocyanate-based adhesion-enhancing agent containing an isocyanate component selected from triisocyanate monomers and polymeric MDI has excellent laminate strength, and exhibits less reduction in laminate strength under a high temperature. The adhesion-enhancing agent layer 13 is particularly preferably formed using an adhesion-enhancing agent containing triphenylmethane-4,4',4"-triisocyanate as a triisocyanate monomer or polymethylene polyphenyl polyisocyanate (NCO content: about 30%, viscosity: 200 to 700 mPa·s) as polymeric MDI. The adhesion-enhancing agent layer 13 is also preferably formed using a two-liquid curable adhesion-enhancing agent containing, as a base resin, tris(p-isocyanatophenyl)thiophosphate as a triisocyanate monomer or a polyethyleneimine-based adhesion-enhancing agent, and containing polycarbodiimide as a crosslinking agent.

The adhesion-enhancing agent layer 13 may be formed by applying the adhesion-enhancing agent using a known coating method, such as a bar coating method, a roll coating method, or a gravure coating method, and drying. In the case of an adhesion-enhancing agent containing a triisocyanate, the amount of the adhesion-enhancing agent to be applied is about 20 to 100 mg/m$^2$, and preferably about 40 to 60 mg/m$^2$; in the case of an adhesion-enhancing agent containing polymeric MDI, the amount of the adhesion-enhancing agent to be applied is about 40 to 150 mg/m$^2$, and preferably about 60 to 100 mg/m$^2$; and in the case of a two-liquid curable adhesion-enhancing agent containing a polyethyleneimine-based adhesion-enhancing agent as a base resin and polycarbodiimide as a crosslinking agent, the amount of the adhesion-enhancing agent to be applied is about 5 to 50 mg/m$^2$, and preferably about 10 to 30 mg/m$^2$. The triisocyanate monomer is a monomer having three isocyanate groups in one molecule, and polymeric MDI is a mixture of MDI and MDI oligomers formed by polymerization of MDI, and is represented by the following formula:

[Chem. 1]

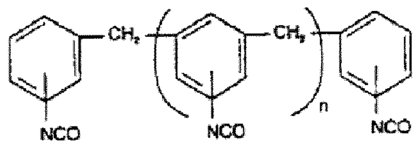

n = 0 − 4

The total thickness of the adhesive film 1 for a metal terminal of the present disclosure is preferably about 20 μm or more, more preferably about 30 μm or more, and preferably about 40 μm or more, from the viewpoint of satisfactorily achieving the effect of the present disclosure. From the same viewpoint, the total thickness is preferably about 500 μm or less, more preferably about 300 μm or less, and preferably about 200 μm or less. Preferred ranges of the total thickness include from about 20 to 500 μm, from about 20 to 300 μm, from about 20 to 200 μm, from about 30 to 500 μm, from about 30 to 300 μm, from about 30 to 200 μm, from about 40 to 500 μm, from about 40 to 300 μm, and from about 40 to 200 μm.

The adhesive film 1 for a metal terminal may have dimensions of, for example, about 10 to 200 mm in the MD direction and about 1 to 100 mm in the TD direction, and may have a thickness of about 20 to 3,000 μm. The metal terminal may have dimensions of, for example, about 20 to 200 mm in the MD direction and about 10 to 100 mm in the TD direction, and may have a thickness of about 50 to 5,000 μm. The seal width when sealing the all-solid-state battery

packaging materials 10 with the adhesive film 1 for a metal terminal interposed therebetween (the width when the adhesive film for a metal terminal and the all-solid-state battery packaging materials are sealed (in the TD direction of the adhesive film for a metal terminal)) is, for example, about 2 to 30 mm.

The adhesive film 1 for a metal terminal of the present disclosure can be produced by molding the resin forming the resin layer A into a film shape using a known method, such as an extrusion lamination method, a T-die method, an inflation method, or a thermal lamination method (when the adhesive film 1 for a metal terminal is composed of a plurality of layers, it can be produced by laminating the layers). To laminate the intermediate layer 11 and each of the first resin layer 12a and the second resin layer 12b with the adhesion-enhancing agent layer 13 therebetween, for example, the adhesion-enhancing agent constituting the adhesion-enhancing agent layer 13 may be applied onto the intermediate layer 11 using the above-described method and dried, and then each of the first resin layer 12a and the second resin layer 12b may be laminated on the adhesion-enhancing agent layer 13.

The method of interposing the adhesive film 1 for a metal terminal between the metal terminal 60 and the all-solid-state battery packaging material 10 is not limited; for example, as shown in Figs. 1 to 3, the adhesive film 1 for a metal terminal may be wound around the metal terminal 60 in the region where the metal terminal 60 is sandwiched between the all-solid-state battery packaging materials 10. Alternatively, although this is not illustrated, the adhesive film 1 for a metal terminal may be disposed on both surfaces of each of the metal terminals 60 as to as cross the two metal terminals 60, in the region where each metal terminal 60 is sandwiched between the all-solid-state battery packaging materials 10.

Metal Terminal

The adhesive film 1 for a metal terminal of the present disclosure is used by being interposed between the metal terminal 60 and the all-solid-state battery packaging material 10. The metal terminal 60 (tab) is a conductive member electrically connected to an electrode (the positive electrode or the negative electrode) of the battery element, and is formed of a metal material. Examples of the metal material constituting the metal terminal 60 include, but are not limited to, aluminum, nickel, and copper. For example, the metal terminal 60 connected to the positive electrode of a lithium-ion all-solid-state battery is usually formed of aluminum or the like. The metal terminal 60 connected to the negative electrode of a lithium-ion all-solid-state battery is usually formed of copper, nickel, or the like.

Preferably, the surface of the metal terminal 60 is subjected to chemical conversion treatment, from the viewpoint of improving the corrosion resistance and the adhesion to the adhesive film 1 for a metal terminal of the present disclosure. For example, when the metal terminal 60 is formed of aluminum, specific examples of the chemical conversion treatment include a known method in which a corrosion-resistant film composed of a phosphate, a chromate, a fluoride, a triazine-thiol compound, or the like is formed. Preferred among methods of forming a corrosion-resistant film is chromate-phosphate treatment that uses a material composed of three components, i.e., a phenol resin, a chromium(III) fluoride compound, and phosphoric acid.

The dimensions of the metal terminal 60 may be adjusted appropriately according to the dimensions and the like of the all-solid-state battery to be used. The thickness of the metal terminal 60 is preferably about 50 to 1,000 μm, and more preferably about 70 to 800 μm. The length of the metal terminal 60 is preferably about 1 to 200 mm, and more preferably about 3 to 150 mm. The width of the metal terminal 60 is preferably about 1 to 200 mm, and more preferably about 3 to 150 mm.

2. All-Solid-State Battery

The all-solid-state battery to which the all-solid-state battery packaging material 10 (hereinafter sometimes referred to as "packaging material 10") of the present disclosure is applied is not limited except that the solid electrolyte layer 40 contains a sulfide solid electrolyte material, and the specific adhesive film 1 for a metal terminal is used. That is, structural elements (such as the packaging material, electrodes, and terminals) and the like other than the solid electrolyte layer 40 and the adhesive film 1 for a metal terminal are not limited as long as they are applicable to all-solid-state batteries, and may be those used in known all-solid-state batteries. Hereinafter, an embodiment in which the adhesive film 1 for a metal terminal of the present disclosure is applied to an all-solid-state battery will be described in detail, using an all-solid-state battery 70 of the present disclosure as an example.

As shown in the schematic diagrams of Figs. 1 to 3, the all-solid-state battery 70 of the present disclosure comprises a battery element comprising at least the single cell 50 including the positive electrode active material layer 31, the negative electrode active material layer 21, and the solid electrolyte layer 40 laminated between the positive electrode active material layer 31 and the negative electrode active material layer 21, the battery element being housed in a package formed of the all-solid-state battery packaging material 10. The all-solid-state battery 70 comprises the metal terminal 60 electrically connected to each of the positive electrode active material layer 31 and the negative electrode active material layer 21 and protruding outside the all-solid-state battery packaging material 10, and the

adhesive film 1 for a metal terminal of the present disclosure is interposed between the metal terminal 60 and the all-solid-state battery packaging material 10. The positive electrode active material layer 31 is laminated on the positive electrode current collector 32 to constitute a positive electrode layer 30, and the negative electrode active material layer 21 is laminated on the negative electrode current collector 22 to constitute a negative electrode layer 20. The positive electrode current collector 32 and the negative electrode current collector 22 are each bonded to the metal terminal 60 exposed to the outside, and electrically connected to an external environment. Between the metal terminal 60 and the all-solid-state battery packaging material 10, the adhesive film 1 for a metal terminal of the present disclosure is disposed to bond the metal terminal 60 and the heat-sealable resin layer 4. The solid electrolyte layer 40 is laminated between the positive electrode layer 30 and the negative electrode layer 20, and the positive electrode layer 30, the negative electrode layer 20, and the solid electrolyte layer 40 constitute the single cell 50. The battery element of the all-solid-state battery 70 may include only one single cell 50 or may include a plurality of single cells 50. Fig. 1 shows an all-solid-state battery 70 including two single cells 50 as a battery element, and Fig. 2 shows an all-solid-state battery 70 in which three single cells 50 are laminated to constitute a battery element.

In the all-solid-state battery 70, the battery element is covered such that flange portions (regions where the heat-sealable resin layers 4 are brought into contact with each other) can be formed on the peripheries of the battery element while the metal terminal 60 connected to each of the positive electrode layer 30 and the negative electrode layer 20 protrudes to the outside, and the heat-sealable resin layers 4 at the flange portions are heat-sealed to each other to achieve hermetic sealing, thus resulting in an all-solid-state battery produced using the all-solid-state battery packaging material. When the battery element is housed in a package formed of the all-solid-state battery packaging material 10 of the present disclosure, the package is formed such that the heat-sealable resin regions of the all-solid-state battery packaging material 10 of the present disclosure are positioned on the inner side (surface that contacts the battery element) thereof. As described above, in the all-solid-state battery 70 of the present disclosure, the heat-sealed peripheral regions of the space (concave region) in which the battery element is housed are preferably flat, except for the regions where the metal terminals are present. Moreover, in the all-solid-state battery 70 of the present disclosure, there is no need to dispose a substance for absorbing hydrogen sulfide (a hydrogen sulfide-adsorbing substance different from the resin constituting the heat-sealable resin layer) in the peripheral regions of the space (concave region) in which the battery element is housed.

As described above, the all-solid-state battery to which the packaging material 10 of the present disclosure is applied is not limited as long as the solid electrolyte layer contains a sulfide solid electrolyte material, and the specific adhesive film 1 for a metal terminal is used. The same applies to the all-solid-state battery 70 of the present disclosure. The following describes examples of materials and the like of members constituting the battery element of the all-solid-state battery to which the packaging material 10 of the present disclosure is applied.

As described above, in the battery element of the all-solid-state battery 70, at least the positive electrode layer 30, the negative electrode layer 20, and the solid electrolyte layer 40 constitute the single cell 50. The positive electrode layer 30 has a structure in which the positive electrode active material layer 31 is laminated on the positive electrode current collector 32. The negative electrode layer 20 has a structure in which the negative electrode active material layer 21 is laminated on the negative electrode current collector 22. The positive electrode current collector 32 and the negative electrode current collector 22 in turn are each bonded to the metal terminal 60 exposed to the outside, and electrically connected to an external environment.

[Positive Electrode Active Material Layer 31]

The positive electrode active material layer 31 is a layer containing at least a positive electrode active material. The positive electrode active material layer 31 may optionally further contain a solid electrolyte material, a conductive material, a binder, and the like, in addition to the positive electrode active material.

Examples of the positive electrode active material include, but are not limited to, oxide active materials and sulfide active materials. When the all-solid-state battery is an all-solid-state lithium battery, examples of oxide active materials used as the positive electrode active material include layered rock salt-type active materials such as $LiCoO_2$, $LiMnO_2$, $LiNiO_2$, $LiVO_2$, and $LiNi_{1/3}Co_{1/3}Mn_{1/3}O_2$, spinel-type active materials such as $LiMn_2O_4$ and $Li(Ni_{0.5}Mn_{1.5})O_4$, olivine-type active materials such as $LiFePO_4$ and $LiMnPO_4$, and Si-containing active materials such as $Li_2FeSiO_4$ and $Li_2MnSiO_4$. Examples of sulfide active materials used as the positive electrode active material of the all-solid-state lithium battery include copper chevrel, iron sulfide, cobalt sulfide, and nickel sulfide.

The positive electrode active material may be in the form of particles, for example, although the form is not limited thereto. The positive electrode active material preferably has a mean particle diameter ($D_{50}$) of, for example, about 0.1 to 50 μm. The content of the positive electrode active material in the positive electrode active material layer 31 is preferably about 10 to 99% by mass, and more preferably about 20 to 90% by mass.

The positive electrode active material layer 31 preferably further contains a solid electrolyte material. This can improve ion conductivity in the positive electrode active material layer 31. The solid electrolyte material contained in the

positive electrode active material layer 31 is the same as solid electrolyte materials exemplified as the solid electrolyte layer 40 described later. The content of the solid electrolyte material in the positive electrode active material layer is preferably about 1 to 90% by mass, and more preferably about 10 to 80% by mass.

The positive electrode active material layer 31 may further contain a conductive material. The addition of a conductive material can improve electron conductivity of the positive electrode active material layer. Examples of the conductive material include acetylene black, ketjen black, and carbon fibers. The positive electrode active material layer may further contain a binder. Examples of the binder include fluorine-containing binders such as polytetrafluoroethylene (PTFE) and polyvinylidene fluoride (PVDF).

While the thickness of the positive electrode active material layer 31 is set appropriately according to the size and the like of the all-solid-state battery, it is preferably about 0.1 to 1,000 μm.

[Positive Electrode Current Collector 32]

Materials constituting the positive electrode current collector 32 include, for example, stainless steel (SUS), aluminum, nickel, iron, titanium, and carbon.

While the thickness of the positive electrode current collector 32 is set appropriately according to the size and the like of the all-solid-state battery, it is preferably about 10 to 1,000 μm.

[Negative Electrode Active Material Layer 21]

The negative electrode active material layer 21 is a layer containing at least a negative electrode active material. The negative electrode active material layer 21 may optionally contain a solid electrolyte material, a conductive material, a binder, and the like, in addition to the negative electrode active material.

Examples of the negative electrode active material include, but are not limited to, carbon active materials, metal active materials, and oxide active materials. Examples of carbon active materials include graphite such as mesocarbon microbeads (MCMB) or highly oriented graphite (HOPG), and amorphous carbon such as hard carbon or soft carbon. Examples of metal active materials include In, Al, Si, and Sn. Examples of oxide active materials include $Nb_2O_5$, $Li_4Ti_5O_{12}$, and SiO.

The negative electrode active material may be in the form of particles, a membrane, or the like, although the form is not limited thereto. The negative electrode active material preferably has a mean particle diameter ($D_{50}$) of, for example, about 0.1 to 50 μm. The content of the negative electrode active material in the negative electrode active material layer 21 is, for example, about 10 to 99% by mass, and more preferably about 20 to 90% by mass.

The negative electrode active material layer 21 preferably further contains a solid electrolyte material. This can improve ion conductivity in the negative electrode active material layer 21. The solid electrolyte material contained in the negative electrode active material layer 21 is the same as solid electrolyte materials exemplified as the solid electrolyte layer 40 described later. The content of the solid electrolyte material in the negative electrode active material layer 21 is preferably about 1 to 90% by mass, and more preferably about 10 to 80% by mass.

The negative electrode active material layer 21 may further contain a conductive material. The negative electrode active material layer 21 may further contain a binder. The conductive material and the binder are the same as those exemplified for the positive electrode active material layer 31 described above.

While the thickness of the negative electrode active material layer 21 is set appropriately according to the size and the like of the all-solid-state battery, it is preferably about 0.1 to 1,000 μm.

[Negative Electrode Current Collector 22]

Materials constituting the negative electrode current collector 22 include, for example, stainless steel (SUS), copper, nickel, and carbon.

While the thickness of the negative electrode current collector 22 is set appropriately according to the size and the like of the all-solid-state battery, it is preferably about 10 to 1,000 μm.

[Solid Electrolyte Layer 40]

The solid electrolyte layer 40 is a layer containing a sulfide solid electrolyte material.

Sulfide solid electrolyte materials are preferred in that they often have higher ion conductivity as compared to oxide solid electrolyte materials. The adhesive film 1 for a metal terminal of the present disclosure when applied to an all-solid-state battery containing a sulfide solid electrolyte material is capable of effectively inhibiting hydrogen sulfide generated inside the all-solid-state battery from leaking outside.

Specific examples of sulfide solid electrolyte materials include $Li_2S$-$P_2Ss$, $Li_2S$-$P_2S_5$-LiI, $Li_2S$-$P_2S_5$-$Li_2O$, $Li_2S$-

$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2SP_2S_5$-ZmSn (where m and n are each a positive number, and Z is any of Ge, Zn, and Ga), $Li_2S$-$GeS_2$, $Li_2S$-$SiS_2$-$Li_3PO_4$, and $Li_2S$-$SiS_2$-$Li_xMO_y$ (where x and y are each a positive number, and M is any of P, Si, Ge, B, Al, Ga, and In). The designation "$Li_2S$-$P_2S_5$" above refers to a sulfide solid electrolyte material obtained using a raw material composition containing $Li_2S$ and $P_2S_5$, and the same applies to other designations. The sulfide solid electrolyte material may be a sulfide glass or a crystallized sulfide glass.

While the content of the solid electrolyte material in the solid electrolyte layer 40 is not limited, it is preferably 60% by mass or more, more preferably 70% by mass or more, and still more preferably 80% by mass or more. The solid electrolyte layer may contain a binder, or may be formed of the solid electrolyte material alone.

While the thickness of the solid electrolyte layer 40 is set appropriately according to the size and the like of the all-solid-state battery, it is preferably about 0.1 to 1,000 μm, and more preferably about 0.1 to 300 μm.

The all-solid-state battery 70 of the present disclosure can be suitably used in an environment in which it is constrained under high pressure from outside. From the viewpoint of satisfactorily inhibiting delamination between the solid electrolyte and the negative electrode active material layer (and between the solid electrolyte and the positive electrode active material layer), the pressure for constraining the all-solid-state battery 70 from outside is preferably about 0.1 MPa or more, more preferably 5 MPa or more, and still more preferably about 10 MPa or more, while it is preferably about 100 MPa or less, more preferably about 70 MPa or less, and still more preferably about 30 MPa or less. Preferred ranges include from about 0.1 to 100 MPa, from about 0.1 to 70 MPa, from about 0.1 to 30 MPa, from about 5 to 100 MPa, from about 5 to 70 MPa, from about 5 to 30 MPa, from about 10 to 100 MPa, from about 10 to 70 MPa, and from about 10 to 30 MPa. An example of a method of constraining the all-solid-state battery 70 under high pressure from outside is a method in which the all-solid-state battery is sandwiched between metal plates or the like, and fixed while being pressed under high pressure (for example, tightened with a vise or the like).

Examples of methods of constraining the all-solid-state battery 70 under high pressure from outside include a method in which the all-solid-state battery is sandwiched between metal plates or the like, and fixed while being pressed under high pressure (for example, tightened with a vise or the like); and gas pressurization.

From the same viewpoint, the temperature at which the all-solid-state battery 70 is constrained from outside is preferably 20°C or more, and more preferably 40°C or more, while it is preferably 200°C or less, and more preferably 150°C or less. A preferred range is, for example, from about 20 to 150°C.

While the shape of the all-solid-state battery 70 of the present disclosure is not limited, it is preferably a rectangular shape in plan view, as shown in the schematic diagram of Fig. 3, for example. Furthermore, the ratio of the length of a first side of the all-solid-state battery 70 with a rectangular shape in plan view to the length of a second side perpendicular to the first side (length of the first side : length of the second side) is preferably about 1:1 to 1:5. If the length of the second side relative to the first side is excessively long, when molding the packaging material 10 to form the below-described molded region M, it is difficult for the second side to be fixed to a mold, and the R value (radius of curvature) of the ridge region (below-described first curved region) along the second side of the molded region M tends to be excessively large.

As shown in the schematic diagrams of Figs. 1 to 3, in the all-solid-state battery 70 of the present disclosure, the battery element is preferably housed in the molded region M with a rectangular shape in plan view, which is formed such that the packaging material 10 protrudes from the heat-sealable resin layer 4 side to the barrier layer 3 side. Fig. 1 shows a diagram in which the molded region M is formed on one side of the all-solid-state battery 70. Fig. 2 shows a diagram in which the molded region M is formed on both sides of the all-solid-state battery 70.

In the present disclosure, when the all-solid-state battery 70 is viewed in plan view from the barrier layer 3 side, in a cross section along the thickness direction of the packaging material 10 on a straight line parallel to two parallel sides (the two sides parallel to the y direction or the two sides parallel to the z direction in Figs. 1 to 3) of the rectangular molded region M, the straight line passing through the midpoint between the two parallel sides (see the dashed line Y in the y direction or the dashed line Z in the z direction in Fig. 3), the molded region M includes a first curved region R1 (see R1z in Fig. 2) and a second curved region R2 (see R2z in Fig. 2) in order from the center to an end of the packaging material 10, wherein the R value (radius of curvature) of the first curved region R1 is preferably 1 mm or more. When the R value (radius of curvature) is 1 mm or more, the force with which the packaging material 10 is stretched at the corners of the rectangular molded region M is not excessively high, which inhibits pinholes and the like from forming in the barrier layer 3 before a predetermined molding depth is reached. When the packaging material 10 is molded with a mold, the molded region M with the first curved region R1 and the second curved region R2 is formed such that the packaging material 10 protrudes from the heat-sealable resin layer 4 side to the barrier layer 3 side. In the molded region M, the first curved region R1 is in a position protruding outside the all-solid-state battery.

In the schematic diagram of Fig. 3, the cross-sectional view on the dashed line Z corresponds to the schematic diagram of Fig. 2, and the molded region M includes the first curved region R1z and the second curved region R2z in order from the center to the end of the packaging material 10. In the schematic diagram of Fig. 3, in the cross-section on the dashed line Y, the molded region M includes a first curved region R1y and a second curved region R2y in order

from the center to the end of the packaging material 10. The term "first curved region R1z" means that the first curved region is along the z direction. Likewise, the term "second curved region R2z" means that the second curved region is along the z direction, the term "first curved region R1y" means that the first curved region is along the y direction, and the term "second curved region R2y" means that the second curved region is along the y direction. As with the R value of the first curved region R1 described above, the R value (radius of curvature) of the first curved region R1y is also preferably 1 mm or more because in this case, the force with which the packaging material 10 is stretched at the corners of the rectangular molded region M is not excessively high, which inhibits pinholes and the like from forming in the barrier layer 3 before a predetermined molding depth is reached.

In the present disclosure, the R value (radius of curvature) at each of the first curved region R1 and the second curved region R2 is the R value (radius of curvature) on the surface of the barrier layer 3 side of the packaging material 10 (that is, on the outer surface side of the packaging material 10, such as the sections enclosed by the dashed lines in Fig. 2).

In the all-solid-state battery 70 of the present disclosure, for the purpose of minimizing the dead space inside the battery, and increasing the volumetric energy density, it is preferred that, as illustrated in Fig. 3, when the first side parallel to the y direction of the all-solid-state battery with a rectangular shape in plan view is a short side, and the second side parallel to the z direction is a long side, the R value (radius of curvature) at the first curved region R1z along the short side parallel to the y direction where a terminal of the all-solid-state battery with a rectangular shape in plan view is mounted is greater than the R value (radius of curvature) at the first curved region R1y along the long side parallel to the z direction.

## 3. All-Solid-State Battery Packaging Material

### Laminated Structure of All-Solid-State Battery Packaging Material

As shown in Figs. 8 to 12, for example, the all-solid-state battery packaging material 10 comprises a laminate comprising at least a base material layer 7, the barrier layer 3, and the heat-sealable resin layer 4 in this order from an outer side. In the all-solid-state battery packaging material 10, the heat-sealable resin layer 4 is the innermost layer. During assembly of an all-solid-state battery using the all-solid-state battery packaging material 10 and a battery element, the battery element is housed in a space formed by heat-sealing peripheral regions of the heat-sealable resin layers 4 of the all-solid-state battery packaging material 10 opposed to each other. In the all-solid-state battery to which the all-solid-state battery packaging material 10 of the present disclosure is applied, the heat-sealed peripheral regions of the space (concave region) in which the battery element is housed are preferably flat, except for the regions where the metal terminals are present. Moreover, in the all-solid-state battery to which the all-solid-state battery packaging material 10 of the present disclosure is applied, a substance for absorbing hydrogen sulfide (a hydrogen sulfide-adsorbing substance different from the resin constituting the heat-sealable resin layer) may or may not be disposed in the peripheral regions of the space (concave region) in which the battery element is housed.

As shown in the schematic diagrams of Figs. 9 to 12, the all-solid-state battery packaging material 10 preferably includes a barrier layer protective film 3a on the heat-sealable resin layer 4-side surface of the barrier layer 3. The all-solid-state battery packaging material 10 preferably also includes a barrier layer protective film 3b on the base material layer 7-side surface of the barrier layer 3. Figs. 10 to 12 show schematic diagrams in which the all-solid-state battery packaging material 10 includes the barrier layer protective films 3a and 3b on both surfaces of the barrier layer 3. As described below, the packaging material 10 may include the barrier layer protective film 3a only on the heat-sealable resin layer 4-side surface of the barrier layer 3, or may include the barrier layer protective films 3a and 3b on both surfaces of the barrier layer 3.

As shown in Figs. 11 and 12, for example, the all-solid-state battery packaging material 10 may optionally have an adhesive agent layer 2 between the base material layer 7 and the barrier layer 3 (or between the base material layer 7 and the barrier layer protective film 3b, if the barrier layer protective film 3b is present), for the purpose of, for example, improving the adhesiveness between these layers. Moreover, as shown in Figs. 11 and 12, for example, the all-solid-state battery packaging material 10 may also optionally have an adhesive layer 5 between the barrier layer 3 and the heat-sealable resin layer 4 (or between the heat-sealable resin layer 4 and the barrier layer protective film 3a, if the barrier layer protective film 3a is present) for the purpose of, for example, improving the adhesiveness between these layers. Furthermore, as shown in Fig. 12, a surface coating layer 6 or the like may be optionally provided on an outer side (opposite to the heat-sealable resin layer 4 side) of the base material layer 7.

While the thickness of the laminate constituting the all-solid-state battery packaging material 10 is not limited, it is preferably about 10,000 $\mu$m or less, about 8,000 $\mu$m or less, and about 5,000 $\mu$m or less, from the viewpoint of reducing costs, improving the energy density, and the like, while it is preferably about 10 $\mu$m or more, about 15 $\mu$m or more, about 20 $\mu$m or more, about 100 $\mu$m or more, about 150 $\mu$m or more, and about 200 $\mu$m or more, from the viewpoint of maintaining the function of the all-solid-state battery packaging material 10 to protect the battery element.

Preferred ranges include from about 10 to 10,000 μm, from about 10 to 8,000 μm, from about 10 to 5,000 μm, from about 15 to 10,000 μm, from about 15 to 8,000 μm, from about 15 to 5,000 μm, from about 20 to 10,000 μm, from about 20 to 8,000 μm, from about 20 to 5,000 μm, from about 100 to 10,000 μm, from about 100 to 8,000 μm, from about 100 to 5,000 μm, from about 150 to 10,000 μm, from about 150 to 8,000 μm, from about 150 to 5,000 μm, from about 200 to 10,000 μm, from about 200 to 8,000 μm, and from about 200 to 5,000 μm, with the ranges from about 20 to 5,000 μm and from about 100 to 500 μm being particularly preferred.

Layers Forming All-Solid-State Battery Packaging Material

The packaging material 10 of the present disclosure comprises a laminate comprising at least the base material layer 7, the barrier layer 3, and the heat-sealable resin layer 4 in this order from the outer side.

As described below, in the present disclosure, the resin constituting the heat-sealable resin layer 4 of the packaging material 10 preferably has a hydrogen sulfide transmission amount of $1.0 \times 10^{-9}$ cc·mm/cm$^2$·sec·cmHg or less. That is, when the adhesive film 1 for a metal terminal comprises a resin layer composed of a resin with a hydrogen sulfide transmission amount of $1.0 \times 10^{-9}$ cc·mm/cm$^2$·sec·cmHg or less, and the resin constituting the heat-sealable resin layer 4 of the packaging material 10 has a hydrogen sulfide transmission amount of $1.0 \times 10^{-9}$ cc·mm/cm$^2$·sec·cmHg or less, hydrogen sulfide generated inside an all-solid-state battery containing a sulfide solid electrolyte material is particularly effectively inhibited from leaking outside. A preferred embodiment of each of the layers constituting the packaging material 10 of the present disclosure will be hereinafter described in detail.

[Base Material Layer 7]

In the present disclosure, the base material layer 7 is a layer optionally provided on an outer side of the barrier layer 3 (or on an outer side of the barrier layer protective film 3b, if it is present) for the purpose of, for example, functioning as a base material of the packaging material 10. The base material layer 7 is positioned as the outermost layer of the packaging material 10.

The material forming the base material layer 7 is not limited as long as it functions as a base material, that is, has at least insulation properties. The base material layer 7 may be formed of, for example, a resin, which may contain additives as described below.

When the base material layer 7 is formed of a resin, it may be a resin film formed of a resin, or may be formed by applying a resin, for example. The resin film may be an unstretched film or a stretched film. Examples of the stretched film include a uniaxially stretched film and a biaxially stretched film, with a biaxially stretched film being preferred. Examples of stretching methods for forming a biaxially stretched film include a sequential biaxial stretching method, an inflation method, and a simultaneous biaxial stretching method. Examples of methods of applying the resin include a roll coating method, a gravure coating method, and an extrusion coating method.

Examples of the resin forming the base material layer 7 include resins such as polyesters, polyamides, polyolefins, epoxy resins, acrylic resins, fluororesins, polyurethanes, silicone resins, and phenol resins, as well as modified resins thereof. The resin forming the base material layer 7 may also be a copolymer of these resins or a modified copolymer thereof. The resin forming the base material layer 7 may also be a mixture of these resins.

Preferred among the above as the resin forming the base material layer 7 are, for example, polyesters and polyamides, with polyesters being more preferred (with polyethylene terephthalate being particularly preferred).

Specific examples of polyesters include polyethylene terephthalate, polybutylene terephthalate, polyethylene naphthalate, polybutylene naphthalate, polyethylene isophthalate, and copolyesters. Examples of copolyesters include copolyesters containing ethylene terephthalate as a main repeating unit. Specific examples of these copolyesters include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used alone or in combination.

Specific examples of polyamides include aliphatic polyamides, such as nylon 6, nylon 66, nylon 610, nylon 12, nylon 46, and copolymers of nylon 6 and nylon 66; polyamides containing aromatics, such as hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polyamide MXD6 (polymethaxylylene adipamide); cycloaliphatic polyamides, such as polyamide PACM6 (polybis(4-aminocyclohexyl)methane adipamide); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

The base material layer 7 preferably contains at least one of a polyester film, a polyamide film, and a polyolefin film, more preferably contains at least one of a stretched polyester film, a stretched polyamide film, and a stretched polyolefin film, still more preferably contains at least one of a stretched polyethylene terephthalate film, a stretched polybutylene terephthalate film, a stretched nylon film, and a stretched polypropylene film, and even more preferably contains at least one of a biaxially stretched polyethylene terephthalate film, a biaxially stretched polybutylene terephthalate film, a biaxially stretched nylon film, and a biaxially stretched polypropylene film.

The base material layer 7 may be a single layer, or may be composed of two or more layers. When the base material layer 7 is composed of two or more layers, it may be a laminate in which resin films are laminated with an adhesive or the like, or may be a laminate of two or more layers of resin films formed by co-extruding resins. The laminate of two or more layers of resin films formed by co-extruding resins may be used in an unstretched state as the base material layer 7, or may be uniaxially or biaxially stretched and used as the base material layer 7. When the base material layer 7 is a single layer, it is preferably composed of a single layer of a polyester resin.

Specific examples of laminates of two or more layers of resin films in the base material layer 7 include a laminate of a polyester film and a nylon film, a laminate of two or more layers of nylon films, and a laminate of two or more layers of polyester films. Preferred are a laminate of a stretched nylon film and a stretched polyester film, a laminate of two or more layers of stretched nylon films, and a laminate of two or more layers of stretched polyester films. For example, when the base material layer 7 is a laminate of two layers of resin films, it is preferably a laminate of a polyester resin film and a polyester resin film, a laminate of a polyamide resin film and a polyamide resin film, or a laminate of a polyester resin film and a polyamide resin film, and more preferably a laminate of a polyethylene terephthalate film and a polyethylene terephthalate film, a laminate of a nylon film and a nylon film, or a laminate of a polyethylene terephthalate film and a nylon film.

When the base material layer 7 is a laminate of two or more layers of resin films, the two or more layers of resin films may be laminated with an adhesive therebetween. Examples of preferred adhesives are the same adhesives as those exemplified for the adhesive agent layer 2 described below. The method of laminating two or more layers of resin films is not limited, and may be any of known methods, for example, a dry lamination method, a sandwich lamination method, an extrusion lamination method, and a thermal lamination method, preferably a dry lamination method. When the lamination is performed using a dry lamination method, a polyurethane adhesive is preferably used as an adhesive. In this case, the thickness of the adhesive is, for example, about 2 to 5 μm. An anchor coat layer may also be formed and laminated on the resin films. Examples of the anchor coat layer are the same adhesives as those exemplified for the adhesive agent layer 2 described below. In this case, the thickness of the anchor coat layer is, for example, about 0.01 to 1.0 μm.

At least one of the surface and the inside of the base material layer 7 may contain additives, such as lubricants, flame retardants, anti-blocking agents, antioxidants, light stabilizers, tackifiers, and anti-static agents. A single additive may be used alone, or a mixture of two or more additives may be used.

In the present disclosure, it is preferred that a lubricant is present on the surface of the base material layer 7, from the viewpoint of improving the moldability of the packaging material 10. While the lubricant is not limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combination.

When a lubricant is present on the surface of the base material layer 7, the amount of the lubricant present is not limited, but is preferably about 3 $mg/m^2$ or more, more preferably about 4 to 15 $mg/m^2$, and still more preferably about 5 to 14 $mg/m^2$.

The lubricant present on the surface of the base material layer 7 may be exuded from the lubricant contained in the resin forming the base material layer 7, or may be applied to the surface of the base material layer 7.

While the thickness of the base material layer 7 is not limited as long as the function as a base material is exhibited, it is, for example, about 3 to 50 μm, and preferably about 10 to 35 μm. When the base material layer 7 is a laminate of two or more layers of resin films, the thickness of the resin film forming each layer is preferably about 2 to 25 μm.

[Adhesive Agent Layer 2]

In the packaging material 10, the adhesive agent layer 2 is a layer that is optionally provided between the base material layer 7 and the barrier layer 3, for the purpose of improving the adhesiveness between these layers.

The adhesive agent layer 2 is formed of an adhesive capable of bonding the base material layer 7 and the barrier layer 3. While the adhesive used for forming the adhesive agent layer 2 is not limited, it may be any of a chemical reaction type, a solvent volatilization type, a heat melting type, a heat pressing type, and the like. The adhesive may also be a two-liquid curable adhesive (two-liquid adhesive), a one-liquid curable adhesive (one-liquid adhesive), or a resin that does not involve a curing reaction. The adhesive agent layer 2 may be composed of a single layer or a plurality of layers.

Specific examples of adhesive components contained in the adhesive include polyesters, such as polyethylene terephthalate, polybutylene terephthalate, polyethylene naphthalate, polybutylene naphthalate, polyethylene isophthalate, and copolyesters; polyethers; polyurethanes; epoxy resins; phenol resins; polyamides, such as nylon 6, nylon 66, nylon 12, and copolyamides; polyolefin-based resins, such as polyolefins, cyclic polyolefins, acid-modified polyolefins, and acid-modified cyclic polyolefins; polyvinyl acetates; celluloses; (meth)acrylic resins; polyimides; polycarbonates; amino resins, such as urea resins and melamine resins; rubbers, such as chloroprene rubber, nitrile rubber, and styrene-butadiene rubber; and silicone resins. These adhesive components may be used alone or in combination. Preferred among these adhesive components is a polyurethane adhesive, for example. Moreover, the resin that serves as an adhesive component can be used in combination with an appropriate curing agent to improve the adhesive strength. The curing agent is appropriately selected from a polyisocyanate, a polyfunctional epoxy resin, an oxazoline group-containing polymer, a polyamine resin, an acid anhydride, and the like, according to the functional group of the adhesive component.

The polyurethane adhesive may be, for example, a polyurethane adhesive that contains a first agent containing a polyol compound and a second agent containing an isocyanate compound. The polyurethane adhesive is preferably a two-liquid curable polyurethane adhesive containing a polyol such as a polyester polyol, a polyether polyol, or an acrylic polyol as the first agent, and an aromatic or aliphatic polyisocyanate as the second agent. The polyurethane adhesive may also be, for example, a polyurethane adhesive that contains a polyurethane compound obtained by reacting a polyol compound and an isocyanate compound beforehand, and an isocyanate compound. The polyurethane adhesive may also be, for example, a polyurethane adhesive that contains a polyurethane compound obtained by reacting a polyol compound and an isocyanate compound beforehand, and a polyol compound. The polyurethane adhesive may also be, for example, a polyurethane adhesive produced by curing a polyurethane compound obtained by reacting a polyol compound and an isocyanate compound beforehand, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates.

Alternatively, the adhesive agent layer 2 is preferably formed of a cured product of a resin composition containing at least one of a polyester and a polycarbonate, and at least one of an alicyclic isocyanate compound and an aromatic isocyanate compound, as with the below-described adhesive layer 5.

The adhesive agent layer 2 may be blended with other components as long as they do not interfere with adhesiveness, and may contain colorants, thermoplastic elastomers, tackifiers, fillers, and the like. When the adhesive agent layer 2 contains a colorant, the all-solid-state battery packaging material can be colored. The colorant may be any of known colorants, such as a pigment or a dye. A single colorant may be used, or a mixture of two or more colorants may be used.

The pigment is not limited in type as long as it does not interfere with the adhesiveness of the adhesive agent layer 2. Examples of organic pigments include azo-based, phthalocyanine-based, quinacridone-based, anthraquinone-based, dioxazine-based, indigo/thioindigo-based, perinone-perylene-based, isoindolenine-based, and benzimidazolone-based pigments. Examples of inorganic pigments include carbon black-based, titanium oxide-based, cadmium-based, lead-based, chromium oxide-based, and iron-based pigments. Other examples include mica powder and fish scale flakes.

Among these colorants, carbon black is preferred, in order to make the external appearance of the all-solid-state battery packaging material black, for example.

The average particle diameter of the pigment is not limited, and may be, for example, about 0.05 to 5 $\mu$m, and preferably about 0.08 to 2 $\mu$m. The average particle diameter of the pigment is the median diameter as measured with a laser diffraction/scattering particle size distribution analyzer.

The pigment content in the adhesive agent layer 2 is not limited as long as the all-solid-state battery packaging material is colored; for example, it is about 5 to 60% by mass, and preferably 10 to 40% by mass.

While the thickness of the adhesive agent layer 2 is not limited as long as the base material layer 7 and the barrier layer 3 can be bonded, it is, for example, about 1 μm or more or about 2 μm or more. On the other hand, the thickness of the adhesive agent layer 2 is, for example, about 10 μm or less or about 5 μm or less. Preferred ranges of the thickness of the adhesive agent layer 2 include from about 1 to 10 μm, from about 1 to 5 μm, from about 2 to 10 μm, and from about 2 to 5 μm.

[Coloring Layer]

A coloring layer (not illustrated) is a layer that is optionally provided between the base material layer 7 and the barrier layer 3. When the adhesive agent layer 2 is provided, the coloring layer may be provided between the base material layer 7 and the adhesive agent layer 2 or between the adhesive agent layer 2 and the barrier layer 3. Alternatively, the coloring layer may be provided on an outer side of the base material layer 7. The all-solid-state battery packaging material can be colored by providing the coloring layer.

The coloring layer can be formed, for example, by applying an ink containing a colorant to the surface of the base material layer 7 or the surface of the barrier layer 3. The colorant may be any of known colorants, such as a pigment or a dye. A single colorant may be used, or a mixture of two or more colorants may be used.

Specific examples of the colorant contained in the coloring layer are the same as those exemplified in the [Adhesive Agent Layer 2] section.

[Barrier Layer 3]

In the packaging material 10, the barrier layer 3 is a layer that at least prevents the ingress of moisture.

The barrier layer 3 may be, for example, a metal foil, a vapor-deposited film, or a resin layer having barrier properties. Examples of the vapor-deposited film include a vapor-deposited metal film, a vapor-deposited inorganic oxide film, and a vapor-deposited carbon-containing inorganic oxide film. Examples of the resin layer include fluorine-containing resins, such as polyvinylidene chloride, polymers containing chlorotrifluoroethylene (CTFE) as a main component, polymers containing tetrafluoroethylene (TFE) as a main component, polymers with fluoroalkyl groups, and polymers with fluoroalkyl units as a main component; and ethylene-vinyl alcohol copolymers. The barrier layer 3 may also be, for example, a resin film having at least one of these vapor-deposited films and resin layers. A plurality of barrier layers 3 may be provided. The barrier layer 3 preferably includes a layer formed of a metal material. Specific examples of metal materials constituting the barrier layer 3 include aluminum alloys, stainless steel, titanium steel, and steel sheets. When the barrier layer 3 is a metal foil, it preferably contains at least one of an aluminum alloy foil and a stainless steel foil.

The aluminum alloy foil is more preferably a soft aluminum alloy foil formed of an annealed aluminum alloy, for example, from the viewpoint of improving the moldability of the packaging material 10, and is more preferably an aluminum alloy foil containing iron, from the viewpoint of further improving the moldability. In the aluminum alloy foil (100% by mass) containing iron, the iron content is preferably 0.1 to 9.0% by mass, and more preferably 0.5 to 2.0% by mass. When the iron content is 0.1% by mass or more, the packaging material can be provided with superior moldability. When the iron content is 9.0% by mass or less, the packaging material can be provided with superior flexibility. Examples of soft aluminum alloy foils include aluminum alloy foils having the compositions as specified in JIS H4160: 1994 A8021 H-O, JIS H4160: 1994 A8079 H-O, JIS H4000: 2014 A8021 P-O, and JIS H4000: 2014 A8079 P-O. These aluminum alloy foils may be optionally blended with silicon, magnesium, copper, manganese, and the like. The softening may be performed by annealing, for example.

Examples of the stainless steel foil include austenitic, ferritic, austenitic-ferritic, martensitic, and precipitation-hardening stainless steel foils. The stainless steel foil is preferably formed of an austenitic stainless steel, from the viewpoint of providing the packaging material 10 with superior moldability.

Specific examples of the austenitic stainless steel constituting the stainless steel foil include SUS304, SUS301, and SUS316L, with SUS304 being particularly preferred.

The thickness of the barrier layer 3 when it is a metal foil may be in a range in which at least the function of the barrier layer to prevent the ingress of moisture is exhibited, and may be, for example, about 9 to 200 μm. The thickness of the barrier layer 3 is, for example, preferably about 85 μm or less, more preferably about 50 μm or less, still more preferably about 40 μm or less, and particularly preferably about 35 μm or less; while it is preferably about 10 μm or more, more preferably about 20 μm or more, and still more preferably about 25 μm or more; and preferred ranges of the thickness include from about 10 to 85 μm, from about 10 to 50 μm, from about 10 to 40 μm, from about 10 to 35 μm, from about 20 to 85 μm, from about 20 to 50 μm, from about 20 to 40 μm, from about 20 to 35 μm, from about 25 to 85 μm, from about 25 to 50 μm, from about 25 to 40 μm, and from about 25 to 35 μm. When the barrier layer 3 is formed of an aluminum alloy foil, the above-defined ranges are particularly preferred, with the range of about 25 to 85

μm or about 25 to 50 μm being particularly preferred. In particular, when the barrier layer 3 is formed of a stainless steel foil, the thickness of the stainless steel foil is preferably about 60 μm or less, more preferably about 50 μm or less, still more preferably about 40 μm or less, even more preferably about 30 μm or less, and particularly preferably about 25 μm or less; while it is preferably about 10 μm or more, and more preferably about 15 μm or more; and preferred ranges of the thickness include from about 10 to 60 μm, from about 10 to 50 μm, from about 10 to 40 μm, from about 10 to 30 μm, from about 10 to 25 μm, from about 15 to 60 μm, from about 15 to 50 μm, from about 15 to 40 μm, from about 15 to 30 μm, and from about 15 to 25 μm.

[Barrier Layer Protective Films 3a and 3b]

In the packaging material 10, the barrier layer protective film 3a is optionally provided on the heat-sealable resin layer 4-side surface of the barrier layer 3. In the packaging material 10, the barrier layer protective film 3a may be provided only on the heat-sealable resin layer 4-side surface of the barrier layer 3, or the barrier layer protective films 3a and 3b may be provided on both surfaces of the barrier layer 3. In the all-solid-state battery 70 of the present disclosure, the barrier layer protective film 3a is preferably provided on the heat-sealable resin layer-side surface. From the viewpoint of improving the adhesion of the barrier layer 3, the barrier layer protective films 3a and 3b are preferably provided on both surfaces of the barrier layer.

In the all-solid-state battery 70 of the present disclosure, when the barrier layer protective film 3a of the packaging material 10 is analyzed using time-of-flight secondary ion mass spectrometry, a $P_{PO3/CrPO4}$ ratio of peak intensity $P_{PO3}$ derived from $PO_3^-$ to peak intensity $P_{CrPO4}$ derived from $CrPO_4^-$ is preferably in the range of 6 to 120.

To inhibit delamination between the solid electrolyte and the negative electrode active material layer or the positive electrode active material layer in an all-solid-state battery, the all-solid-state battery may be constrained by high-pressure pressing from outside the packaging material. However, when the solid electrolyte and the negative electrode active material layer or the positive electrode active material layer are constrained under a high pressure from outside the packaging material of the all-solid-state battery, there is a possibility that the heat-sealable resin layer of the packaging material may be strongly pressed against the battery element, which reduces the thickness of the heat-sealable resin layer (inner layer) of the packaging material, leading to contact between the barrier layer laminated on the packaging material and the solid electrolyte. In particular, if an electric current flows between the barrier layer of the packaging material and the solid electrolyte while in contact with each other, an alloy forms on the surface of the barrier layer, leading to deterioration of the barrier layer. In contrast, in the all-solid-state battery 70 of the present disclosure, the barrier layer protective film 3a is provided on the surface of the barrier layer 3 of the packaging material 10, and therefore, when the all-solid-state battery 70 is constrained under a high pressure, even if an electric current flows between the barrier layer 3 and the solid electrolyte layer 40 while the solid electrolyte extends through the heat-sealable resin layer 4 and the adhesive layer 5, an alloy is unlikely to form on the surface of the barrier layer 3, which effectively inhibits deterioration of the barrier layer 3. In particular, when the peak intensity ratio $P_{PO3/CrPO4}$ of the barrier layer protective film 3a is in the range of 6 to 120, the formation of an alloy on the surface of the barrier layer 3 is more effectively inhibited, and deterioration of the barrier layer 3 is even more effectively inhibited.

In the present disclosure, the lower limit of the $P_{PO3/CrPO4}$ ratio of peak intensity $P_{PO3}$ derived from $PO_3^-$ to peak intensity $P_{CrPO4}$ derived from $CrPO_4^-$ is preferably about 10 or more, while the upper limit is preferably about 115 or less, more preferably about 110 or less, and still more preferably about 50 or less. Preferred ranges of the $P_{PO3/CrPO4}$ ratio include from about 6 to 120, from about 6 to 115, from about 6 to 110, from about 6 to 50, from about 10 to 120, from about 10 to 115, from about 10 to 110, and from about 10 to 50, with the range of about 10 to 50 being more preferred, and the range of about 25 to 32 being particularly preferred.

Moreover, in the present disclosure, when the barrier layer protective film is analyzed using time-of-flight secondary ion mass spectrometry, a $P_{PO2/CrPO4}$ ratio of peak intensity $P_{PO2}$ derived from $PO_2^-$ to peak intensity $P_{CrPO4}$ derived from $CrPCO_4^-$ is preferably in the range of 7 to 70.

The $P_{PO2/CrPO4}$ ratio of peak intensity $P_{PO2}$ derived from $PO_2^-$ to peak intensity $P_{CrPO4}$ derived from $CrPO_4^-$ is preferably in the range of 7 to 70. From the viewpoint of effectively inhibiting deterioration of the barrier layer 3, the lower limit of the $P_{PO2/CrPO4}$ ratio is preferably about 10 or more, while the upper limit is preferably about 65 or less, and more preferably about 50 or less. Preferred ranges of the $P_{PO2/CrPO4}$ ratio include from about 7 to 70, from about 7 to 65, from about 7 to 50, from about 10 to 70, from about 10 to 65, and from about 10 to 50, with the range of about 10 to 50 being more preferred, and the range of about 15 to 37 being particularly preferred.

In the present disclosure, when the barrier layer protective films 3a and 3b are provided on both surfaces of the barrier layer 3, the peak intensity ratio $P_{PO3/CrPO4}$ is preferably in the above-defined range, and likewise, $P_{PO2/CrPO4}$ is also preferably in the above-defined range, for both the barrier layer protective films 3a and 3b.

Specifically, the method of analyzing the barrier layer protective film 3a, 3b using time-of-flight secondary ion mass spectrometry may be performed using a time-of-flight secondary ion mass spectrometer, under the following measurement conditions:

(Measurement Conditions)

Primary ion: doubly charged ion of bismuth cluster ($Bi_3^{++}$)
Primary ion acceleration voltage: 30 kV
Mass range (m/z): 0-1,500
Measurement range: 100 μm × 100 μm
Number of scans: 16 scans/cycle
Number of pixels (per side): 256 pixels
Etching ion: Ar gas cluster ion beam (Ar-GCIB)
Etching ion acceleration voltage: 5.0 kV

The presence of chromium in the barrier layer protective film can be confirmed using X-ray photoelectron spectroscopy. The specific procedure is as follows: First, in the packaging material, the layer (such as the adhesive agent layer, the heat-sealable resin layer, or the adhesive layer) laminated on the barrier layer is physically peel off. Then, the barrier layer is placed in an electric furnace at about 300°C for about 30 minutes to remove organic components present on the surface of the barrier layer. Subsequently, X-ray photoelectron spectroscopy of the surface of the barrier layer is used to confirm the presence of chromium.

The barrier layer protective film 3a, 3b can be formed by subjecting a surface of the barrier layer 3 to chemical conversion treatment with a treatment solution containing a chromium compound, such as chromium oxide.

An example of a method of the chemical conversion treatment with a treatment solution containing a chromium compound is, for example, to apply a chromium compound such as chromium oxide dispersed in phosphoric acid and/or a salt thereof to a surface of the barrier layer 3, and perform baking treatment, thereby forming a barrier layer protective film on the surface of the barrier layer 3.

The peak intensity ratio $P_{PO3/CrPO4}$ of the barrier layer protective film 3a, 3b as well as the peak intensity ratio $P_{PO2/CrPO4}$ can each be adjusted by, for example, adjusting the composition of the treatment solution for forming the barrier layer protective film 3a, 3b, production conditions such as the temperature and time of the baking treatment after the treatment, and the like.

In the treatment solution containing a chromium compound, the proportion of the phosphoric acid and/or salt thereof to the chromium compound is not limited; however, from the viewpoint of setting the peak intensity ratio $P_{PO3/CrPO4}$ and also the peak intensity ratio $P_{PO2/CrPO4}$ in the above-defined respective ranges, the proportion of the phosphoric acid and/or salt thereof is preferably about 30 to 120 parts by mass, and more preferably about 40 to 110 parts by mass, per 100 parts by mass of the chromium compound. The phosphoric acid and salt thereof may be, for example, condensed phosphoric acid and a salt thereof.

The treatment solution containing a chromium compound may further contain an anionic polymer and a crosslinking agent for crosslinking the anionic polymer. Examples of the anionic polymer include a copolymer that contains, as a main component, poly(meth)acrylic acid or a salt thereof, or (meth)acrylic acid or a salt thereof. Examples of the crosslinking agent include a silane coupling agent and a compound having, as a functional group, any of an isocyanate group, a glycidyl group, a carboxyl group, and an oxazoline group. A single anionic polymer or two or more anionic polymers may be used, and likewise, a single crosslinking agent or two or more crosslinking agents may be used.

From the viewpoint of effectively inhibiting deterioration of the barrier layer 3, the treatment solution containing a chromium compound preferably contains an aminated phenol polymer or an acrylic resin. When the treatment solution containing a chromium compound contains an aminated phenol polymer, the content of the aminated phenol polymer is preferably about 100 to 400 parts by mass, and more preferably about 200 to 300 parts by mass, per 100 parts by mass of the chromium compound. The weight average molecular weight of the aminated phenol polymer is preferably about 5,000 to 20,000. The weight average molecular weight of the aminated phenol polymer is the value as measured by gel permeation chromatography (GPC), measured under conditions using polystyrene as standard samples.

The acrylic resin is preferably polyacrylic acid, an acrylic acid-methacrylic acid ester copolymer, an acrylic acid-maleic acid copolymer, an acrylic acid-styrene copolymer, or a derivative thereof, such as a sodium, ammonium, or amine salt. In particular, the acrylic resin is preferably a derivative of polyacrylic acid, such as an ammonium, sodium, or amine salt of polyacrylic acid. As used herein, the term polyacrylic acid refers to a polymer of acrylic acid. Alternatively, the acrylic resin is preferably a copolymer of acrylic acid with a dicarboxylic acid or a dicarboxylic anhydride, or preferably an ammonium, sodium, or amine salt of the copolymer of acrylic acid with a dicarboxylic acid or a dicarboxylic anhydride. A single acrylic resin may be used alone, or a mixture of two or more acrylic resins may be used.

The weight average molecular weight of the acrylic resin is preferably about 1,000 to 1,000,000, more preferably about 3,000 to 800,000, and still more preferably about 10,000 to 800,000. A higher molecular weight increases the durability, but reduces the water solubility of the acrylic resin, which makes the coating solution unstable, leading to a

lack of production stability. Conversely, a lower molecular weight reduces the durability. In the present disclosure, an acrylic resin having a weight average molecular weight of 1,000 or more achieves high durability, while an acrylic resin having a weight average molecular weight of 1,000,000 or less achieves good production stability. As used herein, the weight average molecular weight of the acrylic resin is the value as measured by gel permeation chromatography (GPC), measured under conditions using polystyrene as standard samples.

The acrylic resin preferably has a higher acid value, because it is believed that the larger the number of COOH groups, the higher the effect of contributing to the adhesiveness. However, when the acrylic resin is in the form of a salt as described above, the acid value may not reflect the number of O-C=O bonds; thus, it is believed that analyzing O-C=O bonds from the XPS spectrum as disclosed herein can better reflect the adhesiveness.

When the treatment solution containing a chromium compound contains an acrylic resin, the content of the acrylic resin is preferably about 50 to 400 parts by mass, and more preferably about 80 to 200 parts by mass, per 100 parts by mass of the chromium compound.

From the same the viewpoint, the chromium compound is preferably at least one of chromium(III) fluoride and chromium(III) nitrate. The chromium compound is believed to form a coordinative crosslinked structure whose center is a Cr atom and a highly durable film structure with an aluminum fluoride.

The solvent for the treatment solution containing a chromium compound is not limited as long as it can disperse the components contained in the treatment solution and can then be evaporated by heating; however, the solvent is preferably water.

While the solids concentration of the chromium compound contained in the treatment solution for forming the barrier layer protective film 3a, 3b is not limited, it is, for example, about 1 to 15% by mass, preferably about 7.0 to 12.0% by mass, more preferably about 8.0 to 11.0% by mass, and still more preferably about 9.0 to 10.0% by mass, from the viewpoint of setting the peak intensity ratio $P_{PO3/CrPO4}$ and also the peak intensity ratio $P_{PO2/CrPO4}$ in the above-defined respective predetermined ranges to effectively inhibit deterioration of the barrier layer 3.

While the thickness of the barrier layer protective film 3a, 3b is not limited, it is preferably about 1 nm to 10 μm, more preferably about 1 to 100 nm, and still more preferably about 1 to 50 nm, from the viewpoint of effectively inhibiting deterioration of the barrier layer 3. The thickness of the barrier layer protective film can be measured by observation with a transmission electron microscope, or using a combination of observation with a transmission electron microscope and energy dispersive X-ray spectroscopy or electron energy-loss spectroscopy.

From the same viewpoint, the amount of the barrier layer protective film 3a, 3b per $m^2$ of the surface of the barrier layer 3 is preferably about 1 to 500 mg, more preferably about 1 to 100 mg, and still more preferably about 1 to 50 mg.

Examples of methods of applying the treatment solution containing a chromium compound to the surface of the barrier layer include a bar coating method, a roll coating method, a gravure coating method, and an immersion method.

From the viewpoint of setting the peak intensity ratio $P_{PO3/CrPO4}$ and also the peak intensity ratio $P_{PO2/CrPO4}$ in the above-defined respective predetermined ranges to effectively inhibit deterioration of the barrier layer 3, the heating temperature for baking the treatment solution into the barrier layer protective film is preferably about 170 to 250°C, more preferably about 180 to 230°C, and still more preferably about 190 to 220°C. From the same viewpoint, the baking time is preferably about 2 to 10 seconds, and more preferably about 3 to 6 seconds.

From the viewpoint of more efficiently performing the chemical conversion treatment of a surface of the barrier layer 3, it is preferred that prior to forming the barrier layer protective film 3a, 3b on the surface of the barrier layer 3, the surface of the barrier layer 3 is subjected to degreasing treatment using a known treatment method, such as an alkali immersion method, an electrolytic cleaning method, an acid cleaning method, an electrolytic acid cleaning method, or an acid activation method.

[Heat-Sealable Resin Layer 4]

In the all-solid-state battery packaging material 10 of the present disclosure, the heat-sealable resin layer 4 corresponds to the innermost layer, and is a layer (sealant layer) that exhibits the function of hermetically sealing the battery element upon heat-sealing the heat-sealable resin layers 4 to each other during the assembly of an all-solid-state battery.

While the resin constituting the heat-sealable resin layer 4 is not limited as long as it is a heat-sealable resin, the resin constituting the heat-sealable resin layer 4 in the all-solid-state battery packaging material 10 of the present disclosure preferably has a hydrogen sulfide transmission amount of $1.0 \times 10^{-9}$ cc·mm/cm$^2$·sec·cmHg or less, from the viewpoint of particularly effectively inhibiting hydrogen sulfide generated inside an all-solid-state battery containing a sulfide solid electrolyte material from leaking outside. The hydrogen sulfide transmission amount of the resin constituting the heat-sealable resin layer 4 can be measured using the method specifically described in the Examples.

The hydrogen sulfide transmission amount of the resin constituting the heat-sealable resin layer 4 is preferably about $8.0 \times 10^{-10}$ cc·mm/cm$^2$·sec·cmHg or less, and more preferably about $5.0 \times 10^{-10}$ cc·mm/cm$^2$·sec·cmHg or less. The lower limit of the hydrogen sulfide transmission amount is, for example, about $1.0 \times 10^{-10}$ cc·mm/cm$^2$·sec·cmHg.

Examples of resins with a hydrogen sulfide transmission amount of $1.0 \times 10^{-9}$ cc·mm/cm$^2$·sec·cmHg or less include polyesters, fluororesins, and cellophane, with polyesters and fluororesins being preferred. Specific examples of polyesters include polyethylene terephthalate, polybutylene terephthalate, polyethylene naphthalate, polybutylene naphthalate, polyethylene isophthalate, and copolyesters, with polyethylene terephthalate being preferred. Preferred examples of fluororesins include polytetrafluoroethylene (PTFE), tetrafluoroethylene-ethylene copolymer (ETFE), and polychlorotrifluoroethylene (PCTFE). Particularly preferred as the resin constituting the heat-sealable resin layer 4 is polytetrafluoroethylene, which has a very low hydrogen sulfide transmission amount and a very low water vapor transmission rate.

The resin constituting the resin layer A of the adhesive film 1 for a metal terminal and the resin constituting the heat-sealable resin layer 4 of the all-solid-state battery packaging material 10 are preferably the same resin.

The heat-sealable resin layer 4 may be formed of one resin alone, or may be formed of a blend polymer obtained by combining two or more resins. Furthermore, the heat-sealable resin layer 4 may be formed of only one layer, or may be formed of two or more layers composed of an identical or different resins.

The melting point of the heat-sealable resin layer 4 is preferably 150 to 350°C, more preferably 180 to 300°C, still more preferably 200 to 270°C, and even more preferably 200 to 250°C. The melting point of the heat-sealable resin layer 4 is the endothermic peak as measured with a differential scanning calorimeter (DSC).

The heat-sealable resin layer 4 may also optionally contain a lubricant and the like. The inclusion of a lubricant in the heat-sealable resin layer 4 can improve the moldability of the all-solid-state battery packaging material 10. The lubricant is not limited, and may be a known lubricant. A single lubricant may be used alone, or a combination of two or more lubricants may be used.

While the lubricant is not limited, it is preferably an amide-based lubricant. Specific examples of the lubricant are those exemplified for the base material layer 7. A single lubricant may be used alone, or a combination of two or more lubricants may be used.

When a lubricant is present on the surface of the heat-sealable resin layer 4, the amount of the lubricant present is not limited, but is preferably about 10 to 50 mg/m$^2$, and more preferably about 15 to 40 mg/m$^2$, from the viewpoint of improving the moldability of the electron packaging material.

The lubricant present on the surface of the heat-sealable resin layer 4 may be exuded from the lubricant contained in the resin constituting the heat-sealable resin layer 4, or may be applied to the surface of the heat-sealable resin layer 4.

The thickness of the heat-sealable resin layer 4 is not limited as long as the function of hermetically sealing the battery element upon heat-sealing the heat-sealable resin layers to each other is exhibited; however, from the viewpoint of effectively inhibiting hydrogen sulfide from leaking outside, the thickness of the heat-sealable resin layer 4 is preferably 10 μm or more, more preferably 20 μm or more, and still more preferably 30 μm or more. On the other hand, the thickness of the heat-sealable resin layer 4 is, for example, about 100 μm or less, preferably about 85 μm or less, and more preferably about 60 μm or less, and preferred ranges include from about 10 to 100 μm, from about 10 to 85 μm, from about 10 to 60 μm, from about 20 to 100 μm, from about 20 to 85 μm, from about 20 to 60 μm, from about 30 to 100 μm, from about 30 to 85 μm, and from about 30 to 60 μm.

[Adhesive Layer 5]

In the packaging material 10, the adhesive layer 5 is a layer that is optionally provided between the heat-sealable resin layer 4 and the barrier layer 3 (or the barrier layer protective film 3a, if it is present), in order to strongly bond these layers.

The adhesive layer 5 is preferably formed of a cured product of a resin composition containing at least one of a polyester and a polycarbonate, and at least one of an alicyclic isocyanate compound and an aromatic isocyanate compound. This inhibits delamination between the above-described barrier layer 3 and heat-sealable resin layer 4 in a high-temperature environment, and can also achieve a high sealing strength, in the all-solid-state battery packaging material 10 of the present disclosure.

The polyester is preferably a polyester polyol. The polyester polyol is not limited as long as it has an ester bond in the polymer main chain and has a plurality of hydroxy groups at the ends or a side chain. The polycarbonate is preferably a polycarbonate polyol. The polyester polyol is not limited as long as it has a carbonate bond in the polymer main chain and has a plurality of hydroxy groups at the ends or a side chain. Alternatively, the polyester is preferably, for example, a polyester obtained by reacting a polyester polyol with a polyisocyanate (such as a diisocyanate) beforehand to achieve urethane chain extension, or a polycarbonate obtained by reacting a polycarbonate polyol with a polyisocyanate (such as a diisocyanate) beforehand to achieve urethane chain extension. The resin composition forming the adhesive layer 5 may contain a single polyester or two or more polyesters, or may contain a single polycarbonate or two or more polycarbonates.

The alicyclic isocyanate compound is not limited as long as it is a compound having an alicyclic structure and

an isocyanate group. The alicyclic isocyanate compound preferably has two or more isocyanate groups. Specific examples of the alicyclic isocyanate compound include isophorone diisocyanate (IPDI), bis(4-isocyanatecyclohexyl)methane, 1,3-bis(isocyanatomethyl)cyclohexane, and methylenebis(4,1-cyclohexylene) diisocyanate, as well as polymer or isocyanurate forms thereof, mixtures thereof, or copolymers thereof with other polymers. Examples also include adducts, biurets, and isocyanurates. The alicyclic isocyanate compound is also preferably a polyol-modified polyisocyanate obtained by reacting an alicyclic isocyanate with a polyol (such as a polyester polyol) beforehand. The resin composition forming the adhesive layer 5 may contain a single alicyclic isocyanate compound or two or more alicyclic isocyanate compounds.

The aromatic isocyanate compound is not limited as long as it is a compound having an aromatic ring and an isocyanate group. The aromatic isocyanate compound preferably has two or more isocyanate groups. Specific examples of the aromatic isocyanate compound include tolylene diisocyanate (TDI) and diphenylmethane diisocyanate (MDI), as well as polymer or isocyanurate forms thereof, mixtures thereof, or copolymers thereof with other polymers. Examples also include adducts, biurets, and isocyanurates. The aromatic isocyanate compound is also preferably a polyol-modified polyisocyanate obtained by reacting an aromatic isocyanate with a polyol (such as a polyester polyol) beforehand. The resin composition forming the adhesive layer 5 may contain a single aromatic isocyanate compound or two or more aromatic isocyanate compounds.

It is only required that the resin composition forming the adhesive layer 5 contains at least one of an alicyclic isocyanate compound and an aromatic isocyanate compound; for example, the resin composition forming the adhesive layer 5 may contain an alicyclic isocyanate compound, and may not contain an aromatic isocyanate compound; or, for example, may contain an aromatic isocyanate compound, and may not contain an alicyclic isocyanate compound; or, for example, may contain both an alicyclic isocyanate compound and an aromatic isocyanate compound. The resin composition forming the adhesive layer 5 preferably contains an aromatic isocyanate compound.

The content of each of the alicyclic isocyanate compound and the aromatic isocyanate compound in the adhesive layer 5 is preferably in the range of 0.1 to 50% by mass, and more preferably in the range of 0.5 to 40% by mass, in the resin composition constituting the adhesive layer 5. When the adhesive layer 5 contains both an alicyclic isocyanate compound and an aromatic isocyanate compound, the total content of these compounds is preferably in the range of 0.1 to 50% by mass, and more preferably in the range of 0.5 to 40% by mass, in the resin composition constituting the adhesive layer 5.

The thickness of the adhesive layer 5 is preferably about 50 μm or less, about 40 μm or less, about 30 μm or less, about 20 μm or less, about 7 μm or less, or about 5 μm or less. On the other hand, the thickness of the adhesive layer 5 is preferably about 0.1 μm or more, or about 0.5 μm or more. Preferred ranges of the thickness include from about 0.1 to 50 μm, from about 0.1 to 40 μm, from about 0.1 to 30 μm, from about 0.1 to 20 μm, from about 0.1 to 7 μm, from about 0.1 to 5 μm, from about 0.5 to 50 μm, from about 0.5 to 40 μm, from about 0.5 to 30 μm, from about 0.5 to 20 μm, from about 0.5 to 7 μm, and from about 0.5 to 5 μm.

[Surface Coating Layer 6]

The packaging material 10 may optionally include a surface coating layer 6 on the base material layer 7 (the side of the base material layer 7 opposite to the barrier layer 3) of the laminate, for at least one of the purposes of improving the designability, scratch resistance, and moldability, for example. The surface coating layer 6 is a layer positioned as the outermost layer of the packaging material 10 when an all-solid-state battery is assembled using the packaging material 10.

The surface coating layer 6 may be formed using a resin such as polyvinylidene chloride, a polyester, a polyurethane, an acrylic resin, or an epoxy resin, for example.

When the resin forming the surface coating layer 6 is a curable resin, the resin may be either a one-liquid curable resin or a two-liquid curable resin, preferably a two-liquid curable resin. The two-liquid curable resin may be, for example, a two-liquid curable polyurethane, a two-liquid curable polyester, or a two-liquid curable epoxy resin. Among the above, a two-liquid curable polyurethane is preferred.

The two-liquid curable polyurethane may be, for example, a polyurethane that contains a first agent containing a polyol compound and a second agent containing an isocyanate compound. The two-liquid curable polyurethane is preferably a two-liquid curable polyurethane that contains a polyol such as a polyester polyol, a polyether polyol, or an acrylic polyol as the first agent, and an aromatic or aliphatic polyisocyanate as the second agent. The polyurethane may be, for example, a polyurethane that contains a polyurethane compound obtained by reacting a polyol compound and an isocyanate compound beforehand, and an isocyanate compound. The polyurethane may be, for example, a polyurethane that contains a polyurethane compound obtained by reacting a polyol compound and an isocyanate compound beforehand, and a polyol compound. The polyurethane may be, for example, a polyurethane produced by curing a polyurethane compound obtained by reacting a polyol compound and an isocyanate compound beforehand, by reacting with moisture such as moisture in the air. The polyol compound is preferably a polyester polyol having a hydroxy group

at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. An aliphatic isocyanate compound refers to an isocyanate having an aliphatic group and no aromatic ring, an alicyclic isocyanate compound refers to an isocyanate having an alicyclic hydrocarbon group, and an aromatic isocyanate compound refers to an isocyanate having an aromatic ring.

At least one of the surface and the inside of the surface coating layer 6 may optionally contain additives, such as the above-mentioned lubricants, anti-blocking agents, matting agents, flame retardants, antioxidants, tackifiers, and anti-static agents, according to the functionality and the like to be imparted to the surface coating layer 6 and the surface thereof. Examples of the additives include fine particles having an average particle diameter of about 0.5 nm to 5 μm. The average particle diameter of the additives is the median diameter as measured with a laser diffraction/scattering particle size distribution analyzer.

The additives may be either inorganic or organic. The additives are also not limited in shape, and may be spherical, fibrous, plate-like, amorphous, or flake-like, for example.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper, and nickel. These additives may be used alone or in combination. Among these additives, silica, barium sulfate, and titanium oxide are preferred from the viewpoint of dispersion stability, costs, and the like. Surfaces of the additives may be subjected to various types of surface treatment, such as insulation treatment and dispersibility enhancing treatment.

Examples of methods of forming the surface coating layer 6 include, but are not limited to, applying the resin for forming the surface coating layer 6. When an additive is to be used in the surface coating layer 6, the resin blended with the additive may be applied.

The thickness of the surface coating layer 6 is not limited as long as the above-described function as the surface coating layer 6 is exhibited; for example, it is about 0.5 to 10 μm, and preferably about 1 to 5 μm.

The method for producing the packaging material 10 is not limited as long as it produces a laminate in which the layers of the packaging material 10 are laminated. Examples of the method include a method comprising the step of laminating at least the base material layer 7, the barrier layer 3, the adhesive layer 5, and the heat-sealable resin layer 4 in this order.

One example of the method for producing the packaging material 10 is as follows. First, a laminate including the base material layer 7, the adhesive agent layer 2, and the barrier layer 3 in this order (the laminate may be hereinafter denoted as the "laminate A") is formed. Specifically, the laminate A can be formed using a dry lamination method as follows. The adhesive to be used for forming the adhesive agent layer 2 is applied to the base material layer 7 or to the barrier layer 3, using a coating method such as a gravure coating method or a roll coating method, and dried. Then, the barrier layer 3 or the base material layer 7 is laminated thereon, and the adhesive agent layer 2 is cured.

Subsequently, the adhesive layer 5 and the heat-sealable resin layer 4 are laminated on the barrier layer of the laminate A. Exemplary methods include the following: (1) a method in which the adhesive layer 5 and the heat-sealable resin layer 4 are co-extruded to be laminated on the barrier layer 3 of the laminate A (co-extrusion lamination method); (2) a method in which a laminate in which the adhesive layer 5 and the heat-sealable resin layer 4 are laminated is separately formed, and this laminate is laminated on the barrier layer 3 of the laminate A using a thermal lamination method; (3) a method in which the adhesive for forming the adhesive layer 5 is laminated on the barrier layer 3 of the laminate A by, for example, applying the adhesive onto the barrier layer 3 using an extrusion method or solution coating, followed by drying at a high temperature and further baking, and then the heat-sealable resin layer 4 pre-formed into a sheet is laminated on the adhesive layer 5 using a thermal lamination method; and (4) a method in which the adhesive layer 5 that has been melted is poured between the barrier layer 3 of the laminate A and the heat-sealable resin layer 4 pre-formed into a sheet, and simultaneously the laminate A and the heat-sealable resin layer 4 are bonded with the adhesive layer 5 sandwiched therebetween (sandwich lamination method).

When the surface coating layer 6 is to be provided, the surface coating layer 6 is laminated on the surface of the base material layer 7 opposite to the barrier layer 3. The surface coating layer 6 can be formed by, for example, applying the above-mentioned resin for forming the surface coating layer 6 onto the surface of the base material layer 7. The order of the step of laminating the barrier layer 3 on the surface of the base material layer 7 and the step of

laminating the surface coating layer 6 on the surface of the base material layer 7 is not limited. For example, the surface coating layer 6 may be formed on the surface of the base material layer 7, and then the barrier layer 3 may be formed on the surface of the base material layer 7 opposite to the surface coating layer 6.

In the manner as described above, a laminate is formed including the optional surface coating layer 6/the base material layer 7/the optional adhesive agent layer 2/the optional barrier layer protective film 3b/the barrier layer 3/the optional barrier layer protective film 3a/the optional adhesive layer 5/the heat-sealable resin layer 4 in this order. The laminate may further be subjected to heat treatment of a heat-roll contact type, a hot-air type, a near- or far-infrared radiation type, or the like, in order to strengthen the adhesiveness of the adhesive agent layer 2 and the adhesive layer 5. This heat treatment may be performed, for example, at about 150 to 250°C for about 1 to 5 minutes.

Each of the layers constituting the packaging material 10 may be optionally subjected to surface activation treatment, such as corona treatment, blast treatment, oxidation treatment, or ozone treatment, in order to improve or stabilize the film formability, lamination processing and final product secondary processing (pouching and embossing molding) suitability, and the like. For example, when at least one surface of the base material layer 7 is subjected to corona treatment, the film formability, lamination processing and final product secondary processing suitability, and the like can be improved or stabilized. Furthermore, for example, when the surface of the base material layer 7 opposite to the barrier layer 3 is subjected to corona treatment, ink printability on the surface of the base material layer 7 can be improved.

## Examples

The present disclosure will be hereinafter described in detail with reference to examples and comparative examples; however, the present disclosure is not limited to the examples.

### <Melting Points of Resins>

For each of the resins listed in Table 1, melting peak temperature was measured twice with a differential scanning calorimeter (DSC, the differential scanning calorimeter Q200 from TA Instruments Inc.). Specifically, the measurement was performed by differential scanning calorimetry (DSC), using the procedure as defined in JIS K 7121: 2012 (Testing Methods for Transition Temperatures of Plastics) (Supplement 1 to JIS K 7121: 1987)), as follows: The resin was held at -20°C for 10 minutes and then heated from -20°C to 250°C at a heating rate of 10°C/min to measure the first melting peak temperature P (°C), and thereafter held at 250°C for 10 minutes. Next, the resin was cooled from 250°C to -20°C at a cooling rate of 10°C/min and held for 10 minutes. The resin was further heated from -20°C to 250°C at a heating rate of 10°C/min to measure the second melting peak temperature Q (°C). The flow rate of nitrogen gas was 50 ml/min. Using the above-described procedure, the melting peak temperature P (°C) measured the first time and the melting peak temperature Q (°C) measured the second time were obtained. The temperature with the maximum peak was adopted as the melting point (melting peak). The results are shown in Table 1.

### <Hydrogen Sulfide Transmission Amounts of Resins>

As shown in the schematic diagram of Fig. 13, using each of the resin films (with a thickness as shown in Table 1) as a sample in an environment at a test temperature (approximately 23 ± 5°C), the hydrogen sulfide transmission amount of the resin was obtained according to the procedure as set forth below. The results are shown in Table 1.

(1) Place the sample S between the separable flask upper section 100 and the separable flask lower section 200.
(2) Pass 50 ml/min of nitrogen gas through the vent hole 101 of the separable flask upper section 100, and pass 50 ml/min of hydrogen sulfide gas ($H_2S$ concentration: 20 ± 5 ppm by volume/$N_2$) through the vent hole 201 of the separable flask lower section 200.
(3) Connect a resin bag to the vent hole 101 of the separable flask upper section 100, and sample 0.5 L of the sample gas in 10 minutes, under the following sampling conditions:
Sampling conditions: one sampling in total after the elapse of 48 hours
(4) Measure the concentration of the sample gas collected in the resin bag with a gas chromatograph-flame photometric detector (GC-FPD).
(5) From the measured sample gas concentration (ppb by volume), calculate the transmission amount per hour (nL/hr) using the equation 1 shown below, and calculate the transmission rate ($cc/m^2\cdot day$) using the equation shown below. The result is converted to the unit $cc\cdot mm/cm^2\cdot sec\cdot cmHg$.

$$\text{Equation 1: transmission amount (nL/hr)} = \text{concentration (ppb by volume} \approx \text{nL/L)} \times \text{amount of gas sampled per hour (L/hr)}$$

Given that the test flow rate is 50 mL/min, the amount of gas sampled per hour is 3 L.

$$\text{Equation 2: transmission rate (cc/m}^2\cdot\text{day)} = \text{transmission amount (nL/hr)} \times 24\ \text{(hr)}/10^6/\text{effective test area (m}^2)$$

A separable flask opening area of 0.00465 $m^2$ is used as the effective test area.

<Evaluation of Leakage of Hydrogen Sulfide in Adhesive Films for Metal Terminals>

A resin film (width 80 mm, length 10 mm, thickness 100 μm) composed of each resin with a hydrogen sulfide transmission amount as shown in Table 1 was used as an adhesive film for a metal terminal, and aluminum foil with a width of 70 mm, a length of 50 mm, and a thickness of 300 μm was prepared as a metal terminal. The adhesive film for a metal terminal was laminated to both surfaces of the metal terminal such that their width directions, length directions, or center positions coincided with each other, and then heat-sealed at a width of 5 mm. Here, heat seal bars were applied parallel to the width direction of the adhesive film for a metal terminal. The heat seal bars were 5 mm in width (5 mm in the direction perpendicular to the width direction of the adhesive film for a metal terminal). In the heat-sealed regions, the thickness of each adhesive film for a metal terminal was reduced to 95%. In this manner, a metal terminal with an adhesive film for a metal terminal attached thereto was produced. For the thus-obtained metal terminal with an adhesive film for a metal terminal attached thereto, leakage of hydrogen sulfide (hydrogen sulfide transmission amount, cc) for 10 years was calculated using the value of the hydrogen sulfide transmission amount obtained in <Hydrogen Sulfide Transmission Amounts of Resins> above. The calculation was performed on the assumption that the metal terminal had a hydrogen sulfide transmission amount of 0 cc, and that hydrogen sulfide permeated through the heat-sealed regions of the adhesive film for a metal terminal. The results are shown in Table 1.

<Evaluation of Leakage of Hydrogen Sulfide from All-Solid-State Batteries>

Two sheets of a packaging material (rectangular shape in plan view with a length of 300 mm and a width of 150 mm) formed of a laminate having a base material layer (30 μm)/an adhesive agent layer (3 μm)/a barrier layer (40 μm)/an adhesive layer (3 μm)/a heat-sealable resin layer (with a thickness of the resin film as shown in Table 1) in this order were prepared. The above-described metal terminals with adhesive films for metal terminals attached thereto were also prepared. By simulating an all-solid-state battery produced by disposing the metal terminals with adhesive films for metal terminals attached thereto on peripheral regions (four sides) of the two sheets of the packaging material, followed by heat-sealing at a width of 5 mm (in the heat-sealed regions, the thickness of each heat-sealable resin layer was reduced to 80%), leakage of hydrogen sulfide (hydrogen sulfide transmission amount, cc) for 10 years through the adhesive film for a metal terminal and the heat-sealable resin layers was calculated using the value of the hydrogen sulfide transmission amount obtained in <Hydrogen Sulfide Transmission Amounts of Resins> above. The resin constituting the heat-sealable resin layers and the resin constituting the adhesive film for a metal terminal were identical to each other. The calculation was performed on the assumption that the barrier layer had a hydrogen sulfide transmission amount of 0 cc, and that hydrogen sulfide permeated through the heat-sealed regions of the heat-sealable resin layers (the heat-sealable resin layers and the adhesive film for a metal terminal). The results are shown in Table 1.

[Table 1]

| Resin Film | | | Evaluation of Leakage of Hydrogen Sulfide | | |
|---|---|---|---|---|---|
| Resin | Thickness (μm) | Melting Point (°C) | Hydrogen Sulfide Transmission Amount (cc·mm/cm$^2$·scc·cmHg) of Resin | Leakage of Hydrogen Sulfide through Adhesive Film (Transmission Amount for 10 Years) (cc) | Leakage of Hydrogen Sulfide through Adhesive Film and Packaging Material (Transmission Amount for 10 Years) (cc) When Simulating All-Solid-State Battery |
| Polypropylene | 35 | 168 | $1.11 \times 10^{-8}$ | $6.6 \times 10^{-4}$ | $1.2 \times 10^{-3}$ |
| | 40 | 168 | $1.27 \times 10^{-8}$ | | |
| Polyethylene | 40 | 120 | $1.56 \times 10^{-8}$ | $9.1 \times 10^{-4}$ | $1.8 \times 10^{-3}$ |
| Polycarbonate | 40 | 150 | $1.18 \times 10^{-9}$ | $6.7 \times 10^{-5}$ | $1.5 \times 10^{-4}$ |
| Polytetrafluoroethylene | 50 | 327 | $< 7.61 \times 10^{-10}$ | $3.6 \times 10^{-5}$ | $6.9 \times 10^{-5}$ |
| | 40 | 327 | $< 60.9 \times 10^{-10}$ | | |
| | 31 | 327 | $< 4.72 \times 10^{-10}$ | | |
| Polyethylene Terephthalate | 50 | 225 | $< 7.66 \times 10^{-10}$ | $4.5 \times 10^{-5}$ | $9.7 \times 10^{-5}$ |
| Polybutylene Terephthalate | 50 | 224 | $< 4.37 \times 10^{-10}$ | $4.4 \times 10^{-5}$ | $9.7 \times 10^{-5}$ |

In the table, the designation "<" means less than. For example, "$< 4.72 \times 10^{-10}$" means that the hydrogen sulfide transmission amount of the resin was less than $4.72 \times 10^{-10}$.

Moreover, using the measurement method described below, water vapor transmission amounts were measured for adhesive films for metal terminals each composed of polyethylene terephthalate or polybutylene terephthalate of which hydrogen sulfide transmission amount was measured above. The results are shown in Table 2.

<Evaluation of Water Vapor Transmission Amounts of Adhesive Films for Metal Terminals>

The water vapor transmission amount of each adhesive film for a metal terminal was measured in a measurement environment at 40°C·90%, in accordance with JIS-K7129 method B, MOCON PERMATRAN-W 3/33 SG+. Table 2 shows an average of measurements taken for three samples.

[Table 2]

| Resin Film | | |
|---|---|---|
| Resin | Thickness (μm) | Water Vapor Transmission Rate (g/m$^2$/day) |
| Polyethylene Terephthalate | 200 | 57 |
| Polybutylene Terephthalat | | 21 |

As shown in Table 2, it is observed that polybutylene terephthalate has a low water vapor transmission rate, and thus, when the adhesive film for a metal terminal is composed of polybutylene terephthalate, the ingress of water vapor into the all-solid-state battery through the adhesive film for a metal terminal can be inhibited more satisfactorily, which can inhibit deterioration of the all-solid-state battery due to the reaction of moisture with the solid electrolyte.

As described above, the present disclosure provides embodiments of the invention as itemized below:

Item 1. An adhesive film for a metal terminal of an all-solid-state battery, which is to be interposed between a metal terminal electrically connected to an electrode of a battery element and an all-solid-state battery packaging material for sealing the battery element,

wherein the all-solid-state battery comprises a sulfide solid electrolyte material,
the adhesive film for a metal terminal comprises at least one resin layer, and
the resin constituting the resin layer has a hydrogen sulfide transmission amount of $1.0 \times 10^{-9}$ cc·mm/cm$^2$·sec·cmHg or less.

Item 2. The adhesive film for a metal terminal according to item 1, wherein the resin layer has a melting point of 150°C or more and 350°C or less.
Item 3. The adhesive film for a metal terminal according to item 1 or 2, wherein the resin constituting the resin layer is a polyester or a fluororesin.
Item 4. The adhesive film for a metal terminal according to item 3, wherein the polyester contains polybutylene terephthalate.
Item 5. The adhesive film for a metal terminal according to any one of items 1 to 4, wherein the adhesive film for a metal terminal has a total thickness of 50 μm or more and 500 μm or less.
Item 6. The adhesive film for a metal terminal according to any one of items 1 to 5, wherein the all-solid-state battery packaging material comprises a laminate comprising at least a base material layer, a barrier layer, and a heat-sealable resin layer in this order from an outer side, and
the heat-sealable resin layer has a melting point of 150°C or more and 350°C or less.
Item 7. The adhesive film for a metal terminal according to any one of items 1 to 6, wherein the all-solid-state battery packaging material comprises a laminate comprising at least a base material layer, a barrier layer, and a heat-sealable resin layer in this order from an outer side, and
the resin constituting the heat-sealable resin layer has a hydrogen sulfide transmission amount of $1.0 \times 10^{-9}$ cc·mm/cm$^2$·sec·cmHg or less.
Item 8. A metal terminal with an adhesive film for a metal terminal attached thereto, comprising the adhesive film for a metal terminal according to any one of items 1 to 7, the adhesive film for a metal terminal being attached to the metal terminal.
Item 9. An all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,

wherein the solid electrolyte layer comprises a sulfide solid electrolyte material,
the all-solid-state battery comprises a metal terminal electrically connected to each of the positive electrode active material layer and the negative electrode active material layer and protruding outside the all-solid-state battery packaging material, and
the adhesive film for a metal terminal according to any one of items 1 to 7 is interposed between the metal terminal and the all-solid-state battery packaging material.

Item 10. A method for producing an all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,

wherein the solid electrolyte layer comprises a sulfide solid electrolyte material,
the all-solid-state battery comprises a metal terminal electrically connected to each of the positive electrode active material layer and the negative electrode active material layer and protruding outside the all-solid-state battery packaging material, and
the method comprises the step of interposing the adhesive film for a metal terminal according to any one of items 1 to 7 between the metal terminal and the all-solid-state battery packaging material, and sealing the battery element with the all-solid-state battery packaging material.
Item 11. An all-solid-state battery packaging material for use in an all-solid-state battery,
wherein the all-solid-state battery comprises a battery element including at least a positive electrode active material layer, a negative electrode active material layer, and a solid electrolyte layer laminated between the positive electrode active material layer and the negative electrode active material layer; the all-solid-state battery packaging material for sealing the battery element; and a metal terminal protruding outside the all-solid-state

battery,
an adhesive film for a metal terminal is interposed between the metal terminal and the all-solid-state battery packaging material,
the adhesive film for a metal terminal comprises at least one resin layer,
the resin constituting the resin layer has a hydrogen sulfide transmission amount of $1.0 \times 10^{-9}$ cc·mm/cm$^2$·sec·cmHg or less,
the all-solid-state battery packaging material comprises a laminate comprising at least a base material layer, a barrier layer, and a heat-sealable resin layer, and
the resin constituting the heat-sealable resin layer has a hydrogen sulfide transmission amount of $1.0 \times 10^{-9}$ cc·mm/cm$^2$·sec·cmHg or less.

Item 12. A kit comprising an all-solid-state battery packaging material for use in an all-solid-state battery and an adhesive film for a metal terminal,

wherein the all-solid-state battery comprises a battery element including at least a positive electrode active material layer, a negative electrode active material layer, and a solid electrolyte layer laminated between the positive electrode active material layer and the negative electrode active material layer; the all-solid-state battery packaging material for sealing the battery element; and a metal terminal protruding outside the all-solid-state battery,
the adhesive film for a metal terminal comprises at least one resin layer,
the resin constituting the resin layer has a hydrogen sulfide transmission amount of $1.0 \times 10^{-9}$ cc·mm/cm$^2$·sec·cmHg or less,
the all-solid-state battery packaging material comprises a laminate comprising at least a base material layer, a barrier layer, and a heat-sealable resin layer, and
the kit is used for sealing the battery element with the all-solid-state battery packaging material at the time of use, by interposing the adhesive film for a metal terminal between the metal terminal and the all-solid-state battery packaging material.

Reference Signs List

1: Adhesive film for a metal terminal
2: Adhesive agent layer
3: Barrier layer
3a, 3b: Barrier layer protective film
4: Heat-sealable resin layer
5: Adhesive layer
7: Base material layer
10: All-solid-state battery packaging material
11: Intermediate layer
12a: First resin layer
12b: Second resin layer
13: Adhesion-enhancing agent layer
20: Negative electrode layer
21: Negative electrode active material layer
22: Negative electrode current collector
30: Positive electrode layer
31: Positive electrode active material layer
32: Positive electrode current collector
40: Solid electrolyte layer
50: Single cell
60: Metal terminal
70: All-solid-state battery
S: Sample

**Claims**

1. An adhesive film for a metal terminal of an all-solid-state battery, which is to be interposed between a metal terminal electrically connected to an electrode of a battery element and an all-solid-state battery packaging material for sealing the battery element,

   wherein the all-solid-state battery comprises a sulfide solid electrolyte material,
   the adhesive film for a metal terminal comprises at least one resin layer, and the resin constituting the resin layer has a hydrogen sulfide transmission amount of $1.0 \times 10^{-9}$ cc·mm/cm$^2$·sec·cmHg or less.

2. The adhesive film for a metal terminal according to claim 1, wherein the resin layer has a melting point of 150°C or more and 350°C or less.

3. The adhesive film for a metal terminal according to claim 1 or 2, wherein the resin constituting the resin layer is a polyester or a fluororesin.

4. The adhesive film for a metal terminal according to claim 3, wherein the polyester contains polybutylene terephthalate.

5. The adhesive film for a metal terminal according to any one of claims 1 to 4, wherein the adhesive film for a metal terminal has a total thickness of 50 μm or more and 500 μm or less.

6. The adhesive film for a metal terminal according to any one of claims 1 to 5, wherein the all-solid-state battery packaging material comprises a laminate comprising at least a base material layer, a barrier layer, and a heat-sealable resin layer in this order from an outer side, and
   the heat-sealable resin layer has a melting point of 150°C or more and 350°C or less.

7. The adhesive film for a metal terminal according to any one of claims 1 to 6, wherein the all-solid-state battery packaging material comprises a laminate comprising at least a base material layer, a barrier layer, and a heat-sealable resin layer in this order from an outer side, and
   the resin constituting the heat-sealable resin layer has a hydrogen sulfide transmission amount of $1.0 \times 10^{-9}$ cc·mm/cm$^2$·sec·cmHg or less.

8. A metal terminal with an adhesive film for a metal terminal attached thereto, comprising the adhesive film for a metal terminal according to any one of claims 1 to 7, the adhesive film for a metal terminal being attached to the metal terminal.

9. An all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,

   wherein the solid electrolyte layer comprises a sulfide solid electrolyte material,
   the all-solid-state battery comprises a metal terminal electrically connected to each of the positive electrode active material layer and the negative electrode active material layer and protruding outside the all-solid-state battery packaging material, and
   the adhesive film for a metal terminal according to any one of claims 1 to 7 is interposed between the metal terminal and the all-solid-state battery packaging material.

10. A method for producing an all-solid-state battery comprising a battery element comprising at least a single cell including a positive electrode active material layer, a negative electrode active material layer, and a solid electrolyte layer laminated between the positive electrode active material layer and the negative electrode active material layer, the battery element being housed in a package formed of an all-solid-state battery packaging material,

    wherein the solid electrolyte layer comprises a sulfide solid electrolyte material,
    the all-solid-state battery comprises a metal terminal electrically connected to each of the positive electrode active material layer and the negative electrode active material layer and protruding outside the all-solid-state battery packaging material, and
    the method comprises the step of interposing the adhesive film for a metal terminal according to any one of

claims 1 to 7 between the metal terminal and the all-solid-state battery packaging material, and sealing the battery element with the all-solid-state battery packaging material.

**11.** An all-solid-state battery packaging material for use in an all-solid-state battery,

wherein the all-solid-state battery comprises a battery element including at least a positive electrode active material layer, a negative electrode active material layer, and a solid electrolyte layer laminated between the positive electrode active material layer and the negative electrode active material layer; the all-solid-state battery packaging material for sealing the battery element; and a metal terminal protruding outside the all-solid-state battery,
an adhesive film for a metal terminal is interposed between the metal terminal and the all-solid-state battery packaging material,
the adhesive film for a metal terminal comprises at least one resin layer,
the resin constituting the resin layer has a hydrogen sulfide transmission amount of $1.0 \times 10^{-9}$ $cc \cdot mm/cm^2 \cdot sec \cdot cmHg$ or less,
the all-solid-state battery packaging material comprises a laminate comprisi at least a base material layer, a barrier layer, and a heat-sealable resin layer, and
the resin constituting the heat-sealable resin layer has a hydrogen sulfide transmission amount of $1.0 \times 10^{-9}$ $cc \cdot mm/cm^2 \cdot sec \cdot cmHg$ or less.

**12.** A kit comprising an all-solid-state battery packaging material for use in an all-solid-state battery and an adhesive film for a metal terminal,

wherein the all-solid-state battery comprises a battery element including at least a positive electrode active material layer, a negative electrode active material layer, and a solid electrolyte layer laminated between the positive electrode active material layer and the negative electrode active material layer; the all-solid-state battery packaging material for sealing the battery element; and a metal terminal protruding outside the all-solid-state battery,
the adhesive film for a metal terminal comprises at least one resin layer,
the resin constituting the resin layer has a hydrogen sulfide transmission amount of $1.0 \times 10^{-9}$ $cc \cdot mm/cm^2 \cdot sec \cdot cmHg$ or less,
the all-solid-state battery packaging material comprises a laminate comprising at least a base material layer, a barrier layer, and a heat-sealable resin layer, and
the kit is used for sealing the battery element with the all-solid-state battery packaging material at the time of use, by interposing the adhesive film for a metal terminal between the metal terminal and the all-solid-state battery packaging material.

FIG. 1

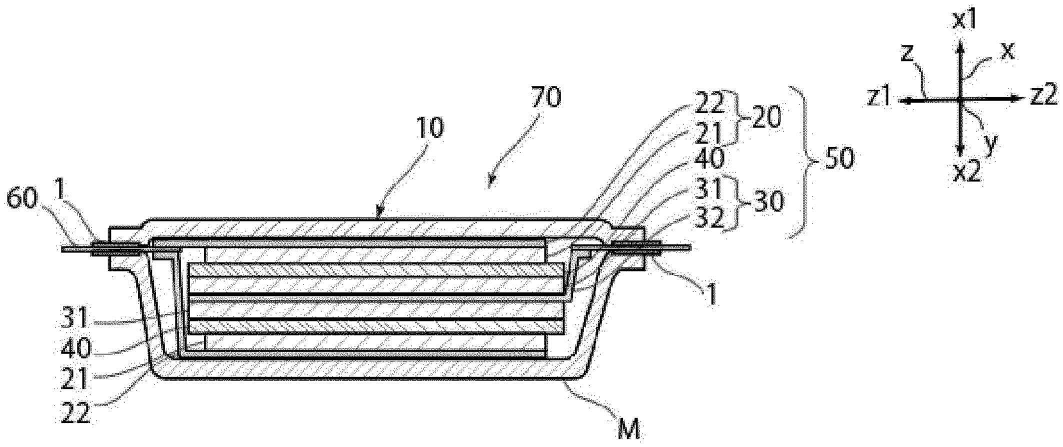

x1
z
x
z1
z2
y
x2
70
10
22
20
21
40
50
31
30
32
60
1
1
31
40
21
22
M


FIG. 2

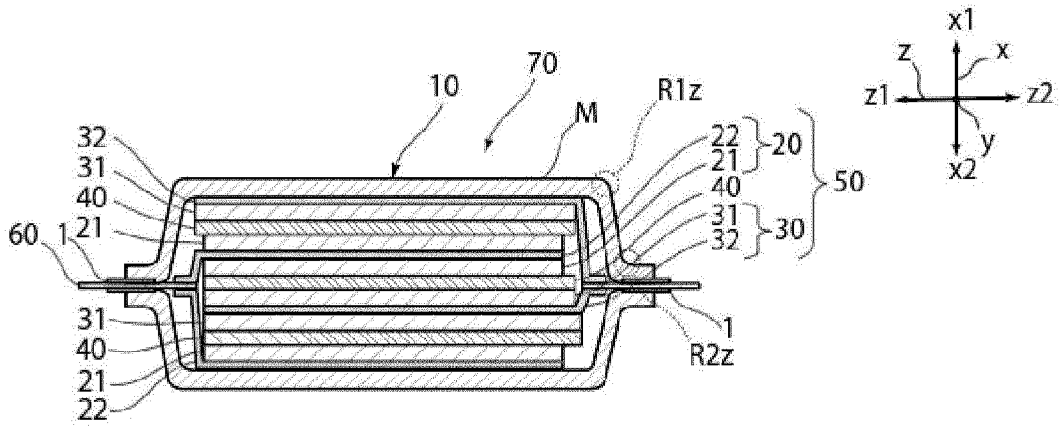

x1
z
x
z1
z2
y
x2
70
10
R1z
M
32
31
40
21
22
20
21
40
50
31
30
32
60
1
1
R2z
31
40
21
22

FIG. 3

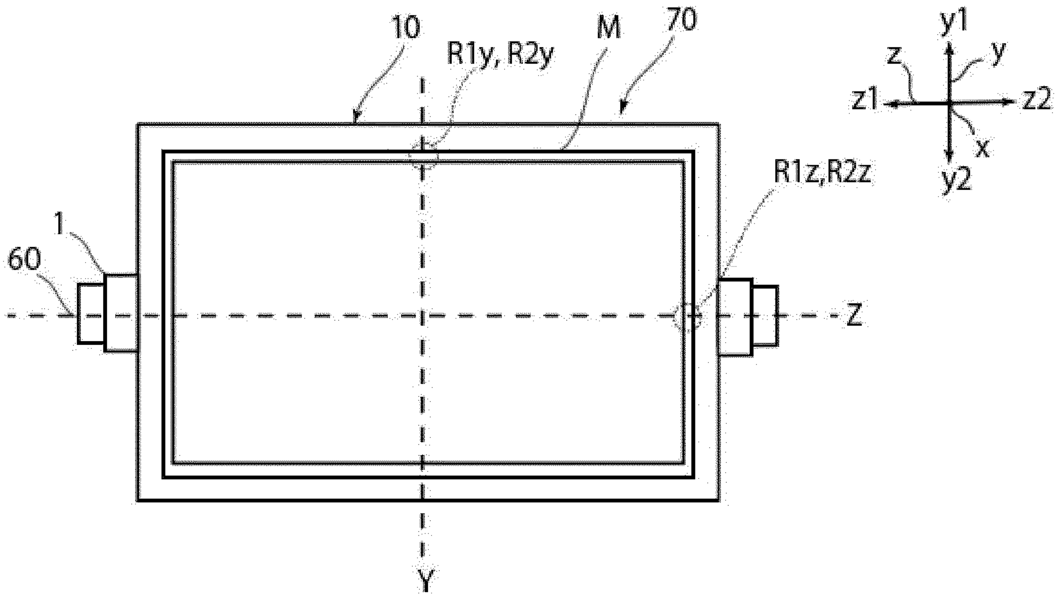

FIG. 4

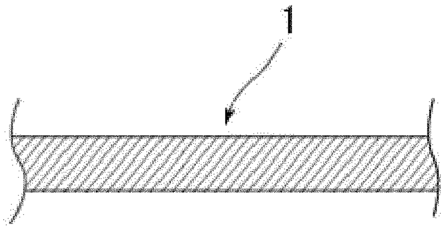


FIG. 5

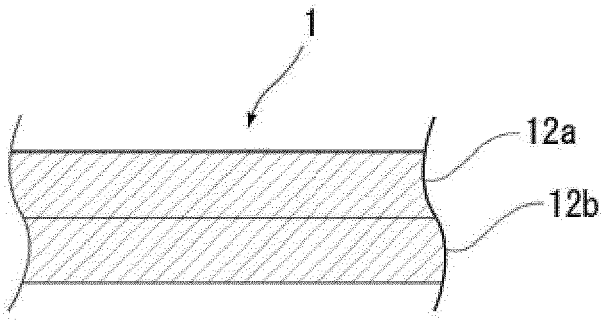


FIG. 6

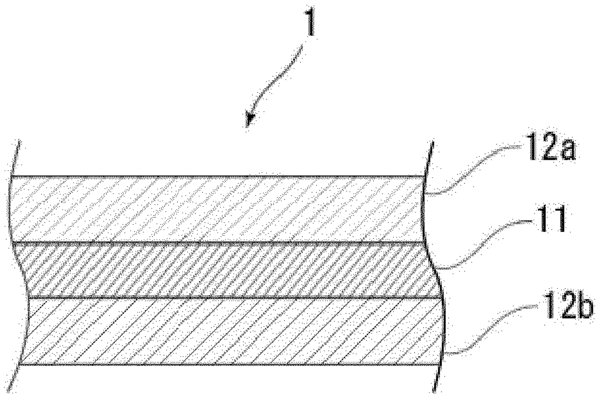

FIG. 7

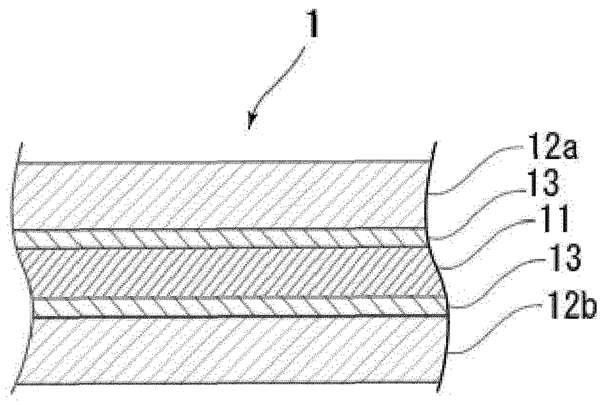

FIG. 8

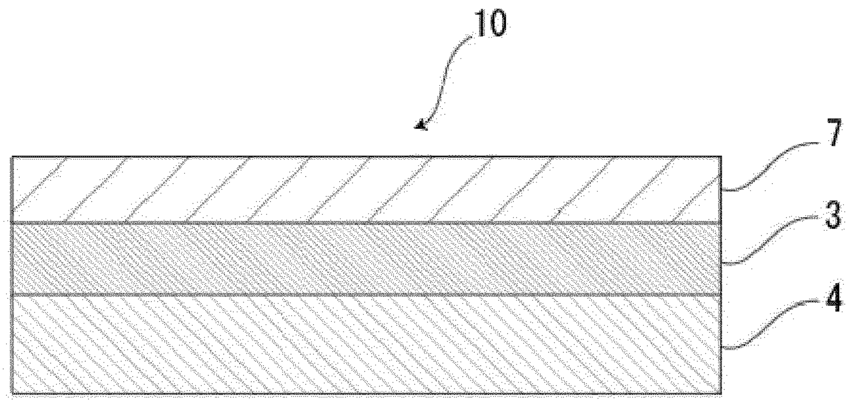


FIG. 9

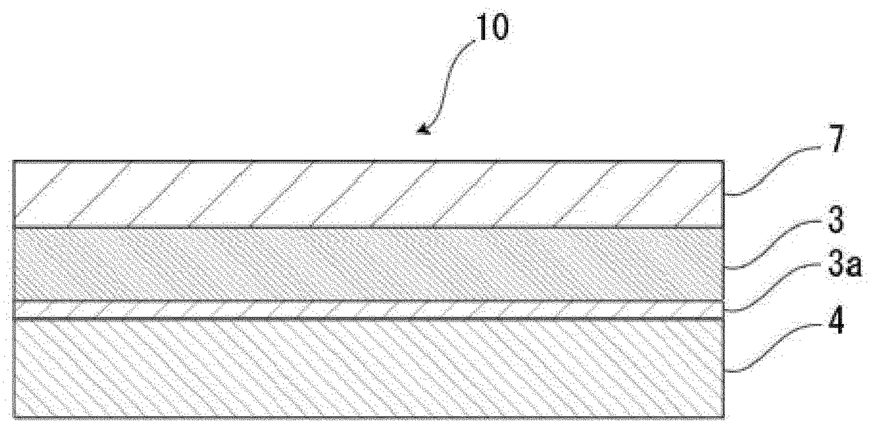


FIG. 10

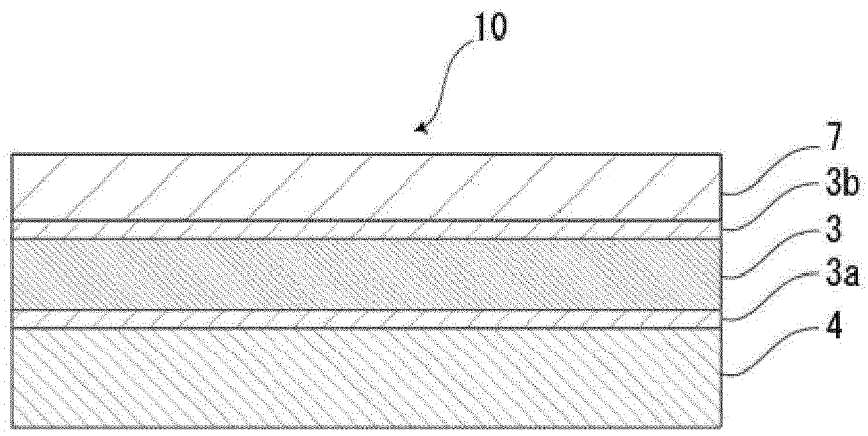

FIG. 11

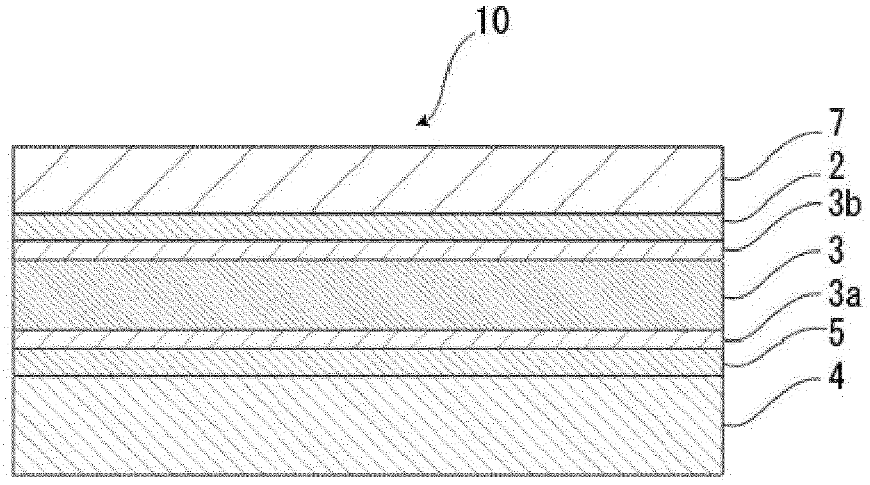


FIG. 12

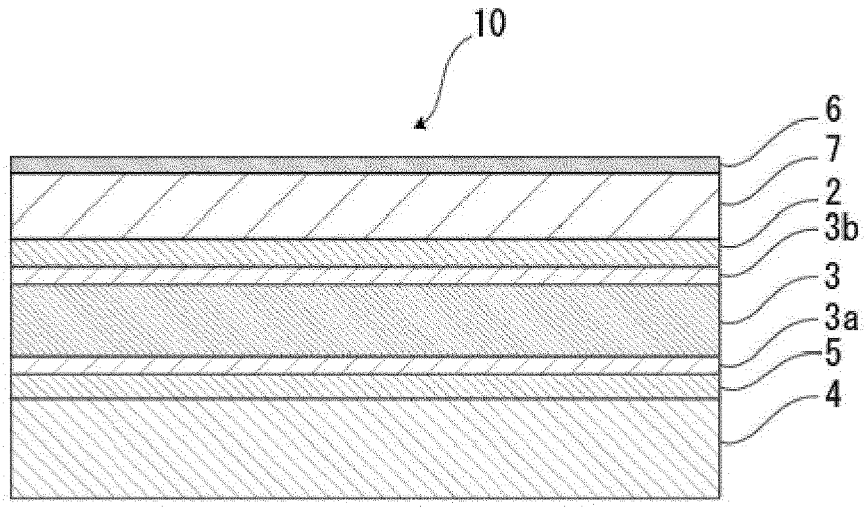

FIG. 13

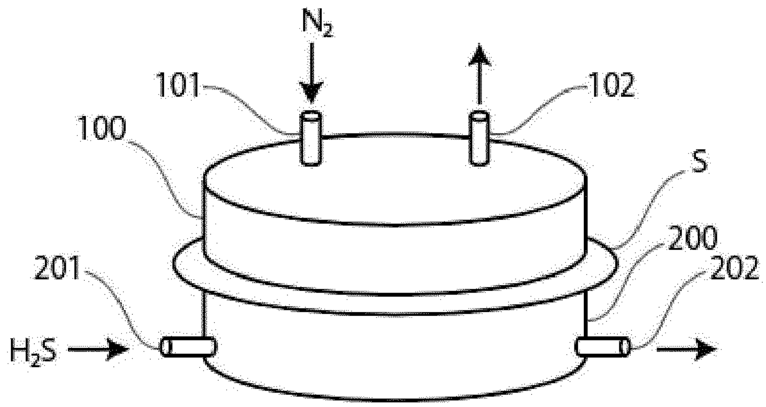

**INTERNATIONAL SEARCH REPORT**

International application No. PCT/JP2021/026897

A. CLASSIFICATION OF SUBJECT MATTER
Int. Cl. H01M10/052(2010.01)i, H01M10/0562(2010.01)i, H01M10/058(2010.01)i, H01M50/105(2021.01)i, H01M50/121(2021.01)i, H01M50/131(2021.01)i, H01M50/184(2021.01)i, H01M50/193(2021.01)i, H01M50/198(2021.01)i
FI: H01M50/198, H01M50/184 C, H01M50/193, H01M10/058, H01M10/0562, H01M10/052, H01M50/105, H01M50/121, H01M50/131

According to International Patent Classification (IPC) or to both national classification and IPC

B. FIELDS SEARCHED

Minimum documentation searched (classification system followed by classification symbols)
Int. Cl. H01M10/052, H01M10/0562, H01M10/058, H01M50/105, H01M50/121, H01M50/131, H01M50/184, H01M50/193, H01M50/198

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-143520 A (FURUKAWA CO., LTD.) 08 August 2016 (2016-08-08) | 1-12 |
| A | JP 2015-179618 A (TOPPAN PRINTING CO., LTD.) 08 October 2015 (2015-10-08) | 1-12 |
| A | JP 2016-184546 A (DAINIPPON PRINTING CO., LTD.) 20 October 2016 (2016-10-20) | 1-12 |
| A | JP 2009-206101 A (DAINIPPON PRINTING CO., LTD.) 10 September 2009 (2009-09-10) | 1-12 |
| A | JP 2017-120790 A (DAINIPPON PRINTING CO., LTD.) 06 July 2017 (2017-07-06) | 1-12 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05.08.2021 | 24.08.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/026897

| Patent Documents referred to in the Report | Publication Date | Patent Family | Publication Date |
|---|---|---|---|
| JP 2016-143520 A | 08.08.2016 | (Family: none) | |
| JP 2015-179618 A | 08.10.2015 | (Family: none) | |
| JP 2016-184546 A | 20.10.2016 | (Family: none) | |
| JP 2009-206101 A | 10.09.2009 | (Family: none) | |
| JP 2017-120790 A | 06.07.2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008103288 A
- JP 2015079638 A